(19) Europäisches Patentamt
European Patent Office
Office européen des brevets

(11) EP 2 487 032 A1

(12) **EUROPEAN PATENT APPLICATION**
published in accordance with Art. 153(4) EPC

(43) Date of publication:
**15.08.2012 Bulletin 2012/33**

(21) Application number: **10822031.0**

(22) Date of filing: **06.10.2010**

(51) Int Cl.:
***B32B 27/00*** *(2006.01)* ***B32B 27/30*** *(2006.01)*

(86) International application number:
**PCT/JP2010/067516**

(87) International publication number:
**WO 2011/043361 (14.04.2011 Gazette 2011/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2009 JP 2009235652**
**16.10.2009 JP 2009239886**

(71) Applicant: **Mitsubishi Rayon Co., Ltd.**
**Minato-ku**
**Tokyo 108-8506 (JP)**

(72) Inventors:
- **OKAFUJI, Hiroshi**
  **Otake-shi**
  **Hiroshima 739-0693 (JP)**
- **YAMAZAWA, Hideto**
  **Otake-shi**
  **Hiroshima 739-0693 (JP)**
- **MOROOKA, Masahiko**
  **Otake-shi**
  **Hiroshima 739-0693 (JP)**
- **SAWANO, Tetsuya**
  **Otake-shi**
  **Hiroshima 739-0693 (JP)**
- **KAWAI, Osamu**
  **Otake-shi**
  **Hiroshima 739-0693 (JP)**

(74) Representative: **TER MEER - STEINMEISTER & PARTNER GbR**
**Me/bk**
**Mauerkircherstrasse 45**
**81679 München (DE)**

# (54) TRANSFER FILM, RESIN LAMINATE, METHOD FOR PRODUCING THE TRANSFER FILM, AND METHOD FOR PRODUCING THE RESIN LAMINATE

(57) An object of the present invention is to provide a transfer film in which the function layer such as an anti-reflective layer can be laminated using a film having high surface tension, and a laminate including a soil resistant layer formed by a wet method and having high water repellency and oil repellency and high transparency, scratch resistance, and sweat resistance can be provided, and a method for producing the transfer film. A transfer film according to the present invention is a transfer film including a transparent base material film and a soil resistant cured film laminated on the surface of the transparent base material film, wherein a water contact angle (1) of a surface of the soil resistant cured film not contacting the transparent base material film is not more than 100˚, a water contact angle (2) of a surface of the soil resistant cured film contacting the transparent base material film is not less than 90˚, and a contact angle ($\alpha$) of triolein is not less than 55˚.

EP 2 487 032 A1

## Description

Technical Field

The present invention relates to a transfer film, a resin laminate, a method for producing a transfer film, and a method for producing a resin laminate.

Background Art

Transparent resins such as acrylic resins and polycarbonate resins are widely used as a variety of materials such as industrial materials and building materials. Particularly in recent years, the transparent resins are used as a front panel of a variety of displays for CRTs and liquid crystal televisions and plasma displays and the like from the viewpoint of the transparency and impact resistance of thereof.

Recently, the front panel needs to be given a variety of functions. One example of the function required includes an anti-reflective function. The anti-reflective function is a function for reducing reflected light of a fluorescent lamp or the like reflected on the front panel in a room and displaying an image more sharply. Examples of a method for giving an anti-reflective function include a method of forming an anti-reflective layer on the surface of a front panel. Moreover, it has been demanded that a (soil resistant) function having a water repellent function and an oil repellent function to prevent soil is further given to the surface of the anti-reflective layer. This is because if soil adheres onto the surface of the anti-reflective layer, change in the color of the portion to which the soil adheres is remarkable, leading to reduction in visibility in an image display member.

In such circumstances, as a method of forming a variety of function layers on a surface of a base material such as plastic plates having a small flexibility, a method is known in which a film having at least a hard coat layer (b) and a thin film coating layer (c) on one surface of a plastic film, having an adhesive layer (d) on the other surface of the plastic film, and having high scratch resistance, soil resistance, and anti-reflective properties is applied to a surface of a base material, as disclosed in Patent Literature 1, for example. Unfortunately, because the plastic film as the base material for forming the function layer exists, there have been problems such as increase in a haze value, peel-off of the film during cutting, difficulties in secondary processability, and air bubbles produced at an interface of the film and the base material during a durability test (80˚C).

In order to solve these problems, for example, Patent Literature 2 proposes a functional layer transfer film in which a functional layer is laminated on a surface of a material by a transfer method, a soil resistant layer used to give a functional layer and the functional layer are sequentially provided on one surface of a base material, and fluorine in the soil resistant layer is distributed in a larger mass proportion on the base material side than that in the functional layer.

As a method for forming the soil resistant layer, a perfluoroalkyl soil resistant agent is used in the related art. In the case where the soil resistant layer is formed by a wet method in which the perfluoroalkyl soil resistant agent is directly applied like printing, however, there has been a problem such that fluorine in the soil resistant layer is distributed in a larger mass proportion on the function layer side, and a sufficient soil resistant function cannot be given to the surface of the material obtained after transfer. In order to solve the problem, Patent Literature 2 proposes a technique for producing a transfer film having a soil resistant layer by a dry method such as a plasma CVD method. Unfortunately, production cost by the method disclosed in Patent Literature 2 is high, and further improvement has been demanded.

As a method for solving the problem in the dry method, for example, Patent Literature 3 proposes a transfer film for anti-reflection having a releasing layer, a soil resistant functional layer, an anti-reflective layer, and an adhesive layer sequentially laminated on one surface of a plastic film. However, the releasing surface of a film for releasing (plastic film having a releasing layer) used for the transfer film has high surface tension. For this, as the soil resistance of the laminate obtained by transfer onto the base material, water repellency was high but oil repellency was insufficient.

In such circumstances, emergence of a transfer film has been demanded in which the function layer such as the anti-reflective layer can be laminated using a film having high surface tension, and a resin laminate including the soil resistant layer formed by the wet method and having high water repellency and oil repellency and high transparency, scratch resistance, and sweat resistance can be provided.

Citation List

Patent Literatures

Patent Literature 1: JP2000-94584A
Patent Literature 2: JP2005-96322A

Patent Literature 3: JP2003-103680A

Summary of Invention

Technical Problem

An object of the present invention is to provide a transfer film in which a film having high surface tension is used, a function layer such as an anti-reflective layer can be laminated, and a soil resistant layer is formed by a wet method and which can provide a resin laminate having high water repellency and oil repellency and high transparency, scratch resistance, and sweat resistance, and a method for producing the transfer film. Another object of the present invention is to provide a resin laminate having high water repellency and oil repellency and high transparency, scratch resistance, and sweat resistance, and a method for producing the resin laminate.

Solution to Problem

A transfer film according to the present invention is a transfer film including a soil resistant cured film laminated on a surface of a transparent base material film, wherein a water contact angle (1) of a surface of the soil resistant cured film not contacting the transparent base material film is not more than 100˚, a water contact angle (2) of a surface of the soil resistant cured film contacting the transparent base material film is not less than 90˚, and a contact angle ($\alpha$) of triolein is not less than 55˚.

A transfer film according to the present invention is a transfer film including a soil resistant cured film laminated on a surface of a transparent base material film, wherein a composition ratio (N/F) of a nitrogen atom (N) to a fluorine atom (F) obtained by X-ray photoelectron spectroscopic analysis of a surface of the soil resistant cured film contacting the transparent base material film is not more than 0.110.

In the transfer film according to the present invention, the soil resistant cured film is formed by curing a soil resistant composition including a monomer (A) containing a perfluoropolyether group and a nitrogen atom, and inorganic fine particles.

In the transfer film according to the present invention, a surface of the inorganic fine particle is surface-treated with a hydrolyzable silane compound.

In the transfer film according to the present invention, the monomer (A) containing a perfluoropolyether group and a nitrogen atom is a compound represented by a following formula (1):

[Formula 1]

Formula (1)

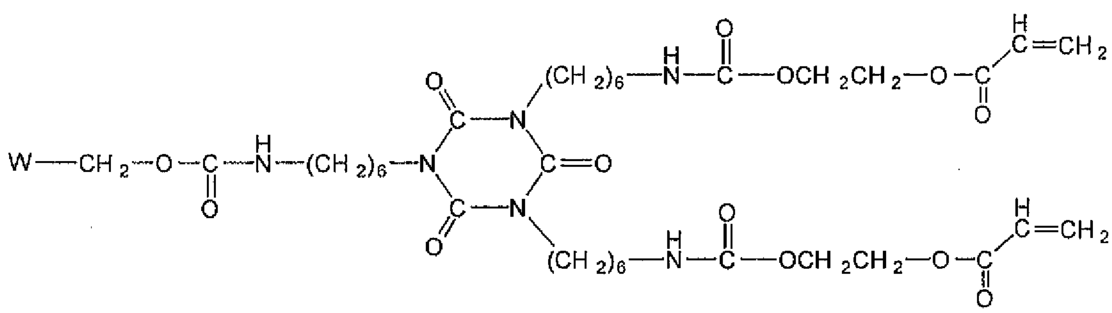

wherein W represents a perfluoropolyether group.

In the transfer film according to the present invention, the soil resistant cured film contains a low refractive index component.

In the transfer film according to the present invention, an adhesive layer is laminated on a surface of the soil resistant cured film not contacting the transparent base material film,

The transfer film according to the present invention is a transfer film including a soil resistant cured film and a function layer sequentially laminated on a surface of a transparent base material film, wherein the function layer contains at least one layer selected from a low refractive index layer, a high refractive index layer, a hard coat layer, and an antistatic layer.

In the transfer film according to the present invention, an adhesive layer is laminated on a surface of the function layer not contacting the soil resistant cured film.

In the transfer film according to the present invention, the adhesive layer is a layer of a thermoplastic resin coating film containing a thermoplastic resin or a layer of a curable coating film containing an active energy beam curable composition.

A method for producing a transfer film according to the present invention includes the steps of: applying a soil resistant composition onto a surface of a transparent base material film to form a soil resistant film, and curing the soil resistant film to form a soil resistant cured film.

In the method for producing a transfer film according to the present invention, the transparent base material film includes an aromatic polyester compound,

The method for producing a transfer film according to the present invention includes: a soil resistant film forming step of applying a soil resistant composition on to a surface of a transparent base material film to form a soil resistant film, a liquid organic compound applying step of applying at least one liquid organic compound selected from alcohols, esters, ethers, and ketones onto a surface of the soil resistant film, a volatilizing step of volatilizing the applied liquid organic compound, and a soil resistant cured film forming step of curing the soil resistant film to form a soil resistant cured film,

A method for producing a resin laminate according to the present invention includes the steps of: bonding an adhesive layer of the transfer film to a resin base material, and removing the transparent base material film from the soil resistant cured film to obtain a resin laminate.

In the method for producing a resin laminate according to the present invention, the adhesive layer contains an active energy beam curable mixture; and after the step of bonding the adhesive layer of the transfer film to the resin base material, the adhesive layer is irradiated with an active energy beam to cure the active energy beam curable mixture and form a coating film layer.

A resin laminate according to the present invention is a resin laminate produced by the method for producing a resin laminate, wherein a water contact angle of an exposed surface of a soil resistant cured film is not less than 90°, a contact angle ($\alpha$) of triolein is not less than 55°, and a composition ratio (N/F) of a nitrogen atom (N) to a fluorine atom (F) obtained by X-ray photoelectron spectroscopic analysis is not more than 0.110.

Advantageous Effects of Invention

According to the present invention, a transfer film can be provided in which a film having high surface tension is used, the function layer such as the anti-reflective layer can be laminated, and a soil resistant layer formed by a wet method and which can provide a laminate having high water repellency and oil repellency and high transparency, scratch resistance, and sweat resistance. Moreover, a resin laminate having high water repellency and oil repellency and high transparency, scratch resistance, and sweat resistance can be provided.

Description of Embodiment

[Transparent base material film]

The transparent base material film used in the present embodiment is peeled and removed after the transfer film according to the present embodiment is laminated on the surface of a resin base material described later. As the transparent base material film, those used as release films for transfer in the related art, for example, active energy beam-permeable films and the like can be used. Moreover, in the present embodiment, as the transparent base material film, laminate films having a release layer as the surface layer can be used.

As the transparent base material film, preferred are active energy beam-permeable films in which the critical surface tension of the surface of the transparent base material film or the release layer is not less than 40 mN/m, because cissing defects (a phenomenon in which an undercoat is exposed in part of a coating film) are not produced when a soil resistant composition is applied onto the surface of the transparent base material film to form a soil resistant film, and the active energy beam-permeable films have high film forming properties.

In the present embodiment, the critical surface tension can be calculated by a Zisman plot. Namely, several reference solutions each having a different surface tension are prepared, these reference solutions are dropped onto the surface of a film, the contact angle ($\theta$) of the reference solution to the surface of the film is measured. From the obtained contact angle ($\theta$), a $\cos\theta$ value is calculated. The $\cos\theta$ value and the value of the surface tension of the reference solution are plotted. The value of the surface tension at the point of intersection of the line of the Zisman plot and the line represented by $\cos\theta = 1$ is defined as the critical surface tension.

Specific examples of the transparent base material film include synthetic resin films such as polyethylene terephthalate films (hereinafter, referred to as "PET films"), polycarbonate films, polyamide films, and polyamidimide

films, composite film-like products or composite sheet-like products of these, and those obtained by laminating a release layer on these composite film-like products or composite sheet-like products. As the transparent base material film, a soil resistant film is preferably directly formed on a film including an aromatic polyester compound such as PET films, polyethylene naphthalate films (hereinafter, referred to as "PEN films"), polybutylene terephthalate films (hereinafter, referred to as "PBT films"), polybutylene naphthalate film (hereinafter, referred to as "PBN films"), and polytrimethyleneterephthalate films (hereinafter, referred to as "PTT films"). As the transparent base material film, PET films and PEN films are more preferred. If the soil resistant film is formed directly on these films, the water contact angle (2) of the surface contacting the transparent base material film and the contact angle ($\alpha$) of triolein can be increased even if the soil resistant composition contains a small amount of the monomer (A) containing a perfluoropolyether group and a nitrogen atom. As a result, a large amount of a component for improving scratch resistance can be added, leading to high scratch resistance of the surface of the resin laminate.

The thickness of the transparent base material film is not particularly limited. From the viewpoint of allowing easy production of the transfer film without wrinkles and cracks, the thickness is preferably not less than 4 $\mu$m, more preferably not less than 12 $\mu$m, and still more preferably not less than 30 $\mu$m. Moreover, from the viewpoint of cost and transmittance of ultraviolet rays, the thickness of the transparent base material film is preferably not more than 500 $\mu$m, more preferably not more than 150 $\mu$m, and still more preferably not more than 120 $\mu$m.

In the case where the soil resistant cured film is difficult to peel off from the surface of the transparent base material film, a release layer may be provided on the surface of the transparent base material film. In the case where the release layer is formed on the surface of the transparent base material film, a known polymer and wax for forming the release layer can be properly selected as a release layer forming material.

Examples of a method for forming a release layer include a method in which a coating material prepared by dissolving a melamine-based resin, an urea-based resin, an urea-melamine-based resin, or a benzoguanamine-based resin and a surface active agent in an organic solvent or water is applied onto the surface of a transparent base material film by a known printing method such as a gravure printing method, a screen printing method, and an offset printing method, and dried or cured to form a release layer.

The thickness of the release layer is approximately 0.1 to 3 $\mu$m, for example. Preferably, the release layer has a proper thickness because the transparent base material film tends to be easily peeled off from the soil resistant cured film. On the other hand, preferably, the thickness of the release layer is not excessively thick, because the soil resistant cured film tends to be difficult to peel off from the transparent base material film before transfer.

[Soil resistant cured film]

The soil resistant cured film is a film obtained by curing a soil resistant composition, and the water contact angle (1) of a surface of the soil resistant cured film not contacting the transparent base material film (hereinafter, referred to as the "water contact angle (1).") is not more than 100˚. The water contact angle (1) is preferably not less than 80˚ and not more than 95˚. At a water contact angle (1) of not more than 100˚, production of cissing defects can be suppressed when an adhesive layer and a function layer described later are formed on the surface of the soil resistant cured film. Here, the soil resistant cured film may contain a partially cured product (part of a curable compound in the soil resistant composition is reacted and cured).

At a water contact angle (1) of not less than 80˚, a good state of the interface can be provided between the soil resistant cured film and the function layer, a cured coating film layer or a thermoplastic resin coating film layer in the resin laminate according to the present embodiment. In the case where a function layer having an anti-reflective function is formed on the surface of the soil resistant cured film, a high anti-reflective function in the surface of the resin laminate after transfer is obtained.

A degree of curing of the soil resistant cured film is increased and the water contact angle (1) is increased as a curing reaction of the soil resistant composition progresses. The soil resistant cured film may contain a non-reacted product of the soil resistant composition, or may be in a state curable by the curing reaction of the soil resistant composition.

In the soil resistant cured film, the water contact angle (2) of a surface thereof contacting the transparent base material film (hereinafter, referred to as the "water contact angle (2).") is not less than 90˚, and a contact angle ($\alpha$) of triolein (hereinafter, referred to as the "contact angle ($\alpha$) of triolein.") of a surface thereof contacting the transparent base material film is not less than 55˚. The water contact angle (2) is preferably not less than 95˚. The contact angle ($\alpha$) of triolein is preferably not less than 60˚. If the water contact angle (2) is not less than 90˚ and the contact angle ($\alpha$) of triolein is not less than 55˚, soil such as fingerprints, sebum, and makeup foundation on the surface of the soil resistant cured film on the surface of the resin laminate after transfer can be made less prominent.

Preferably, in the soil resistant cured film, the composition ratio (N/F) of a nitrogen atom (N) to a fluorine atom (F) obtained by X-ray photoelectron spectroscopic analysis of the surface of the soil resistant cured film contacting the transparent base material film is not more than 0.110. This is because soil such as fingerprints, sebum, and makeup foundation on the surface of the soil resistant cured film on the surface of the laminate after transfer can be made less

prominent.

The water contact angle (1) is measured in the state of the transfer film. The water contact angle (2), the contact angle (α) of triolein, and the composition ratio (N/F) of a nitrogen atom (N) to a fluorine atom (F) obtained by X-ray photoelectron spectroscopic analysis of the surface of the soil resistant cured film contacting the transparent base material film can be obtained by measuring the surface of the resin laminate after transfer. The water contact angle (2), the contact angle (α) of triolein, and the composition ratio (N/F) of a nitrogen atom (N) to a fluorine atom (F) obtained by X-ray photoelectron spectroscopic analysis of the surface of the soil resistant cured film contacting the transparent base material film do not depend on the condition on production of the resin laminate. A specific measurement method will be described later.

The film thickness of the soil resistant cured film is preferably not less than 10 nm, and more preferably not less than 60 nm from the viewpoint of the water repellency, oil repellency, and scratch resistance of the surface of the resin laminate obtained in the present embodiment. Moreover, from the viewpoint of optical characteristics, the film thickness is preferably not more than 1.3 μm, and more preferably not more than 300 nm, and still more preferably not more than 110 nm.

[Soil resistant composition]

Examples of a soil resistant composition that forms the soil resistant cured film (hereinafter, referred to as a "soil resistant composition.") include at least one selected from thermosetting and active energy beam curable compositions and having curability.

Examples of components of the soil resistant composition include the monomer (A) containing a perfluoropolyether group and a nitrogen atom. The monomer (A) has a perfluoropolyether group and a nitrogen atom in the same compound independently. Specific examples of the monomer (A) containing a perfluoropolyether group and a nitrogen atom include a monomer (A-1) containing a perfluoropolyether group and a nitrogen atom obtained by reacting triisocyanate (C) obtained by trimerizing diisocyanate (hereinafter, referred to as the "triisocyanate (C).") with an active hydrogen containing compound (D) (hereinafter, referred to as the "compound (A-1).").

Examples of diisocyanate used to obtain the triisocyanate (C) include diisocyanates having an isocyanate group bonded to an aliphatic skeleton such as hexamethylene diisocyanate, isophorone diisocyanate, xylylene diisocyanate, hydrogenated xylylene diisocyanate, and dicyclohexylmethane diisocyanate, and diisocyanates having an isocyanate group bonded to an aromatic skeleton such as tolylene diisocyanate, diphenylmethane diisocyanate, and naphthalene diisocyanate.

Examples of the active hydrogen containing compound (D) include compounds containing active hydrogen such as a hydroxyl group. Specific examples of the active hydrogen containing compound (D) include perfluoropolyether (D-1) having one active hydrogen (hereinafter, referred to as the "polyether (D-1).") and a monomer (D-2) having active hydrogen and a carbon-carbon double bond (hereinafter, referred to as the "monomer (D-2).").

Examples of the polyether (D-1) include compounds having a perfluoropolyether group and one hydroxyl group in one molecule terminal. Specific examples of the polyether (D-1) include a compound represented by the following formula (2).

[Formula 2]

Formula (2)

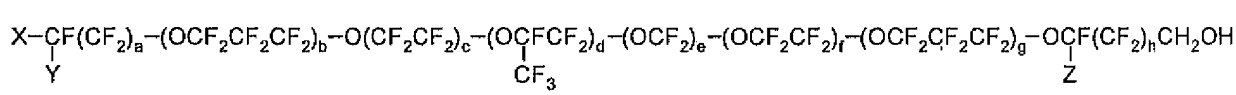

(wherein X is a fluorine atom; Y and Z each are a fluorine atom or a trifluoromethyl group; a is an integer of 1 to 16; c is an integer of 0 to 5; b, d, e, f, and g are integer of 0 to 200; and h is an integer of 0 to 16.)

In the formula (2), if the numeric values of a to h are not excessively large, the molecular weight is likely to be not excessively large, leading to high solubility. On the other hand, if the numeric values of a to h are not excessively small, the water repellency and oil repellency are likely to be high.

Examples of the monomer (D-2) include 2-hydroxyethyl (meth)acrylate, 2-hydroxypropyl (meth)acrylate, and 2-hydroxybutyl (meth)acrylate. In the present embodiment, "(meth)acrylic" means "acrylic" or "methacrylic."

As a method for synthesizing the compound (A-1), for example, the polyether (D-1) is reacted with one isocyanate group in the triisocyanate (C), and the monomer (D-2) is reacted with the other two isocyanate groups. Thus, the compound (A-1) can be obtained. In the reaction, the polyether (D-1) and the monomer (D-2) may be reacted with the triisocyanate (C) at the same time, or may be sequentially reacted with the triisocyanate (C).

Specific examples of the compound (A-1) include compounds represented by the formula (1). Preferably, the monomer (A) containing a perfluoropolyether group and a nitrogen atom is the compound represented by the formula (1) from the viewpoint of high water repellency and oil repellency.

As other examples of the monomer (A) containing a perfluoropolyether group and a nitrogen atom, a compound (A-2) obtained by reacting a compound (E) having an isocyanate group and one or two (meth)acryloyloxy groups in the same compound with perfluoropolyether (F) having at least one active hydrogen in the molecule terminal (hereinafter, referred to as the "compound (A-2).") may be used. As the perfluoropolyether (F) having at least one active hydrogen in the molecule terminal, commercial products can be used, and examples of perfluoropolyether diol include trade names: FLUOROLINK D10H, FLUOROLINK D, and FLUOROLINK D4000 made by Solvay Solexis S.p.A.

As the compound (E) having an isocyanate group and one or two (meth)acryloyloxy groups in the same compound, commercial products can be used, and examples thereof include trade names: Karenz BEI (1,1-bis(acryloyloxymethyl)ethyl isocyanate), Karenz AOI (2-acryloyloxyethyl isocyanate), and Karenz M01 (2-methacryloyloxyethyl isocyanate) made by Showa Denko K.K.

As the compound (A-2), for example, as a compound having the isocyanate group in the compound (E) bonded to the hydroxyl group in the compound (F), a compound independently having one perfluoropolyether group and one or two (preferably, two) vinyl group(s) (or a (meth)acryloyloxy group) in one molecule can be used. Here, "independently" means that the perfluoropolyether group and the (meth)acryloyloxy group are not directly bonded.

The amount of the monomer (A) containing a perfluoropolyether group and a nitrogen atom contained in the soil resistant composition is preferably not less than 10 parts by mass and not more than 75 parts by mass based on 100 parts by mass of the solid content in the composition. At an amount within the range, high water repellency, oil repellency, and hardness of the surface layer of the resin laminate obtained by transferring the soil resistant cured film formed using the composition are provided. Namely, the water contact angle (2) is not less than 90˚, and the contact angle ($\alpha$) of triolein is not less than 55˚. Here, the "solid content" refers to the component other than the solvent.

In the case where the transparent base material film to which the soil resistant composition is applied includes the aromatic polyester compound, the amount of the monomer (A) containing a perfluoropolyether group and a nitrogen atom contained in the soil resistant composition is preferably not less than 10 parts by mass, and more preferably not less than 12 parts by mass based on 100 parts by mass of the solid content in the composition. Moreover, the amount of the monomer (A) containing a perfluoropolyether group and a nitrogen atom contained in the soil resistant composition is preferably not more than 50 parts by mass, and more preferably not more than 30 parts by mass. The soil resistant composition contains a small amount of the monomer (A) containing a perfluoropolyether group and a nitrogen atom. For this reason, the hardness can be further improved while high water repellency and oil repellency in the surface layer of the resin laminate are kept. This can reduce the number of steps, and is also preferred from the viewpoint of cost. Further, because the soil resistant composition contains a small amount of the monomer (A) containing a perfluoropolyether group and a nitrogen atom, the water contact angle (1) can be kept low even if the hardness is increased. As a result, an anti-reflective ability and the cissing defects are well balanced.

Moreover, the amount of the monomer (A) containing a perfluoropolyether group and a nitrogen atom to be contained is preferably not less than 10 parts by mass, and more preferably not less than 12 parts by mass based on 100 parts by mass of the soil resistant composition also in the case of using a technique in which the soil resistant composition is applied, and the liquid organic compound is applied and dried to be cured, as described later, similarly to the case of direct application to the transparent base material film. Moreover, the amount of the monomer (A) containing a perfluoropolyether group and a nitrogen atom to be contained is preferably not more than 50 parts by mass, and more preferably not more than 30 parts by mass. At an amount in the range, high water repellency and oil repellency in the surface layer of the resin laminate can be kept.

In the present embodiment, the soil resistant composition preferably contains inorganic fine particles (B) from the viewpoint of obtaining the soil resistant cured film having the water contact angle (1) and the water contact angle (2) specified in the present embodiment. The content of the inorganic fine particles (B) in the soil resistant composition is preferably not less than 25 parts by mass and not more than 90 parts by mass. The "fine particles" of the inorganic fine particles (B) designate particles having an average particle size of 1 nm to 200 nm. The average particle size is a value obtained by measurement by a particle size distribution measurement apparatus SALD-7100 (product name, made by SHIMADZU Corporation).

Specific examples of the inorganic fine particles (B) include low refractive index fine particles such as colloidal silica, porous silica, hollow silica, magnesium fluoride, and cryolite, and high refractive index fine particles such as $ZrO_2$, $TiO_2$, NbO, ITO, ATO, $SbO_2$, $In_2O_3$, $SnO_2$, and ZnO. One of these may be used, or two or more thereof may be used in combination.

In the case where not only water repellency and oil repellency but also the anti-reflective ability are given to

the resin laminate according to the present embodiment, the soil resistant cured film obtained by curing the soil resistant film can function as a low refractive index function layer, and a high refractive index layer can be formed in a layer under the soil resistant cured film. The resin laminate having the configuration has advantages in cost.

In the case where the resin laminate is obtained, a low refractive index component can be blended in the soil resistant cured film. As the low refractive index component, for example, among the inorganic fine particles (B), low refractive index fine particles having a refractive index not more than 1.5 are preferably used. As described later, silica fine particles are preferable from the viewpoint of easily hydrolyzing the surfaces of the inorganic fine particles (B), and hollow silica is more preferable from the viewpoint of a low refractive index and easy reduction in the reflectance. In the present embodiment, the refractive index is a value obtained by measurement with a laser at 594 nm using a Prism Coupler (made by Metricon Corporation, Model 2010).

The inorganic fine particles (B) having the surfaces of the inorganic fine particles surface-treated with a hydrolyzable silane compound are preferred because the water contact angle (1) in the soil resistant cured film can be reduced and the water contact angle (2) can be increased and because strength of the soil resistant cured film can be improved.

In the mixing ratio when a hydrolyzable silane compound is reacted with the surfaces of the inorganic fine particles (B), the inorganic fine particles (B) are preferably not less than 30% by mass and more preferably not less than 40% by mass based on the total amount of the inorganic fine particles (B) and the hydrolyzable silane compound from the viewpoint of the water repellency, oil repellency, scratch resistance, and sweat resistance of the surface of the resin laminate after transfer obtained in the present embodiment. The mixing ratio is preferably not more than 80% by mass, and more preferably not more than 70% by mass.

Examples of the hydrolyzable silane compound include 3-(meth)acryloxypropyltrimethoxysilane, 3-(meth)acryloxypropylmethyldimethoxysilane, 3-(meth)acryloxypropylmethyldiethoxysilane, 3-(meth)acryloxypropyltriethoxysilane, p-styryltrimethoxysilane, 2-(3,4-epoxycyclohexyl)ethyltrimethoxysilane, 3-glycidoxypropyltrimethoxysilane, and 3-glycidoxypropylmethyldiethoxysilane. One of these may be used, or two or more thereof may be used in combination. Other than the hydrolyzable silane compound, for example, a known surface active agent can be used in combination. Examples of the known surface active agent include anionic surface active agents, nonionic surface active agents, and cationic surface active agents.

In the case where the soil resistant composition contains the monomer (A) having an unsaturated bond, the hydrolyzable silane compound preferably has an unsaturated bond because the water contact angle (2) in the soil resistant cured film can be further increased.

In the present embodiment, from the viewpoint of improvement in scratch resistance of the surface of the resin laminate obtained in the present embodiment, a compound having at least two (meth)acryloyloxy groups in the molecule (hereinafter, referred to as a "crosslinking component") may be added to the soil resistant composition. The amount of the crosslinking component to be contained in the soil resistant composition is preferably 0 to 30 parts by mass based on 100 parts by mass of the solid content in the soil resistant composition.

Examples of the crosslinking component include esterified products obtained from 1 mol of a polyhydric alcohol and not less than 2 mol of a (meth)acrylic acid or a derivative thereof, and esterified products obtained from a polyvalent carboxylic acid or an anhydride thereof, a polyhydric alcohol, and a (meth)acrylic acid or a derivative thereof.

Examples of the esterified product obtained from 1 mol of a polyhydric alcohol and not less than 2 mol of a (meth)acrylic acid or a derivative thereof include polyethylene glycol di(meth)acrylates such as diethylene glycol di(meth) acrylate, triethylene glycol di(meth)acrylate, and tetraethylene glycol di(meth)acrylate; alkyldiol di(meth)acrylates such as 1,4-butanediol di(meth)acrylate, 1,6-hexanediol di(meth)acrylate, and 1,9-nonanediol di(meth)acrylate; and trifunctional or more polyol poly(meth)acrylates such as trimethylol propane tri(meth)acrylate, trimethylol ethane tri(meth) acrylate, pentaglycerol tri(meth)acrylate, pentaerythritol tri(meth)acrylate, pentaerythritol tetra(meth)acrylate, glycerol tri(meth)acrylate, dipentaerythritol tri(meth)acrylate, dipentaerythritol tetra(meth)acrylate, dipentaerythritol penta(meth) acrylate, dipentaerythritol hexa(meth)acrylate, tripentaerythritol tetra(meth)acrylate, tripentaerythritol penta(meth)acrylate, tripentaerythritol hexa(meth)acrylate, and tripentaerythritol hepta(meth)acrylate. One of these may be used, or two or more thereof may be used in combination.

In the esterified products obtained from a polyvalent carboxylic acid or an anhydride thereof, a polyhydric alcohol, and a (meth)acrylic acid or a derivative thereof, examples of a combination of a polyvalent carboxylic acid or an anhydride thereof and a polyhydric alcohol and a (meth)acrylic acid (a polyvalent carboxylic acid or an anhydride thereof/polyhydric alcohol/(meth)acrylic acid) include malonic acid/trimethylol ethanel(meth)acrylic acid, malonic acid/trimethylol propanel(meth)acrylic acid, malonic acid /glycerol(meth)acrylic acid, malonic acid/pentaerythritol/(meth)acrylic acid, succinic acid/trimethylol ethane/(meth)acrylic acid, succinic acid/trimethylol propane/(meth)acrylic acid, succinic acid/glycerol/(meth)acrylic acid, succinic acid/pentaerythritol/(meth)acrylic acid, adipic acid/trimethylol ethane/(meth) acrylic acid, adipic acid/trimethylol propane/(meth)acrylic acid, adipic acid/glycerol/(meth)acrylic acid, adipic acid/pentaerythritol/(meth)acrylic acid, glutaric acid/trimethylol ethane/(meth)acrylic acid, glutaric acid/trimethylol propane/(meth) acrylic acid, glutaric acid/glycerol/(meth)acrylic acid, glutaric acid/pentaerythritol/(meth)acrylic acid, sebacic acid/trimethylol ethane/(meth)acrylic acid, sebacic acid/trimethylol propane/(meth)acrylic acid, sebacic acid/glycerol/(meth)acrylic

acid, sebacic acid/pentaerythritol/(meth)acrylic acid, fumaric acid/trimethylol ethane/(meth)acrylic acid, fumaric acid/trimethylol propane/(meth)acrylic acid, fumaric acid/glycerol/(meth)acrylic acid, fumaric acid/pentaerythritol/(meth)acrylic acid, itaconic acid/trimethylol ethane/(meth) acrylic acid, itaconic acid/trimethylol propane/(meth)acrylic acid, itaconic acid/glycerol/(meth)acrylic acid, itaconic acid/pentaerythritol/(meth)acrylic acid, maleic anhydride/trimethylol ethane/(meth)acrylic acid, maleic anhydride/trimethylol propane/(meth)acrylic acid, and maleic anhydride/glycerol/(meth)acrylic acid and maleic anhydride/pentaerythritol/(meth)acrylic acid.

Examples of the other compounds having at least two (meth)acryloyloxy groups in the molecule include urethane (meth)acrylates obtained by reacting not less than 3 mol of an acrylic monomer having active hydorgen such as 2-hydroxyethyl (meth)acrylate, 2-hydroxypropyl (meth)acrylate, 2-hydroxy-3-methoxypropyl(meth)acrylate, N-methylol (meth)acrylamide, N-hydroxy(meth)acrylamide, 1,2,3-propanetriol-1,3-di(meth)acrylate, and 3-acryloyloxy-2-hydroxypropyl (meth)acrylate with 1 mol of a polyisocyanate obtained by trimerization of a diisocyanate such as trimethylol propane tolylene diisocyanate, hexamethylene diisocyanate, tolylene diisocyanate, diphenylmethane diisocyanate, xylene diisocyanate, 4,4'-methylene bis(cyclohexylisocyanate), isophorone diisocyanate, and trimethylhexamethylene diisocyanate; poly[(meth)acryloyloxyethylene] isocyanurates such as di(meth)acrylates or tri(meth)acrylates of tris(2-hydroxyethyl) isocyanurate; epoxy poly(meth)acrylates; and urethane poly(meth)acrylates. One of these crosslinking components can be used alone, or two or more thereof can be used in combination.

In the case where the soil resistant composition is an active energy beam curable composition, a photoinitiator can be blended in the soil resistant composition. Examples of the photoinitiator include carbonyl compounds such as benzoin, benzoin methyl ether, benzoin ethyl ether, benzoin isopropyl ether, benzoin isobutyl ether, acetoin, butyroin, toluoin, benzyl, benzophenone, p-methoxybenzophenone, 2,2-diethoxyacetophenone, $\alpha,\alpha$-dimethoxy-$\alpha$-phenylacetophenone, methyl phenyl glyoxylate, ethyl phenyl glyoxylate, 4,4'-bis(dimethylamino)benzophenone, 1-hydroxy-cyclohexyl-phenyl-ketone, and 2-hydroxy-2-methyl-1-phenylpropane-1-one; sulfur compounds such as tetramethylthiuram monosulfide and tetramethylthiuram disulfide; and phosphorus compounds such as 2,4,6-trimethylbenzoyldiphenylphosphine oxide, bis(2,4,6-trimethylbenzoyl)-phenylphosphine oxide, and benzoyldiethoxyphosphine oxide. One of these can be used, or two or more thereof can be used in combination. Among these, preferred are phosphorus compounds such as 2,4,6-trimethylbenzoyldiphenylphosphine oxide, bis(2,4,6-trimethylbenzoyl)-phenylphosphine oxide, and benzoyldiethoxyphosphine oxide because the water contact angle (1) of the soil resistant cured film can be reduced.

From the viewpoint of curability of the soil resistant cured film by irradiation with ultraviolet rays, the amount of the photoinitiator to be added is preferably not less than 0.1 parts by mass, more preferably not less than 0.5 parts by mass, and still more preferably not less than 1 part by mass based on 100 parts by mass of the total solid content in the soil resistant composition. Moreover, from the viewpoint of good color tone of the soil resistant cured film and high soil resistance, the amount of the photoinitiator to be added is preferably not more than 10 parts by mass, and more preferably not more than 7 parts by mass.

In the case where the soil resistant composition is a thermosetting composition, a thermal curing agent can be blended in the soil resistant composition. Examples of the thermal curing agent include azo-based polymerization initiators such as 2,2'-azobis(4-methoxy-2,4-dimethylvaleronitrile), 2,2'-azobisisobutyronitrile, 2,2'-azobis-(2,4-dimethylvaleronitrile); and organic peroxide-based polymerization initiators such as lauroyl peroxide, diisopropylperoxydicarbonate, benzoyl peroxide, bis(4-t-butylcyclohexyl) peroxydicarbonate, t-butyl peroxyneodecanoate, and t-hexyl perperoxypivalate. These can be used alone, or two or more thereof can be used in combination.

In the present embodiment, when necessary, a variety of additives such as a slip property improving agent, a leveling agent, an ultraviolet absorbing agent, and a light stabilizer such as HALS can be blended in the soil resistant composition. The amount of the additives to be blended is preferably not more than 10 parts by mass based on 100 parts by mass of the total solid content in the soil resistant composition from the viewpoint of transparency of the soil resistant cured film.

In the present embodiment, in order to adjust the concentration of the solid content in the soil resistant composition, a diluent solvent can be added to the soil resistant composition. Examples of the diluent solvent include methyl ethyl ketone, methyl isobutyl ketone, isopropanol, ethanol, 1-methoxy-2-propanol, and 2,2,3,3-tetrafluoro-1-propanol.

The concentration of the solid content in the soil resistant composition is preferably 0.1 to 20% by mass. At a concentration of the solid content in the soil resistant composition in the range, the soil resistant composition can have high reservation stability, and the film thickness can be easily controlled at a desired film thickness.

[Adhesive layer]

In the present embodiment, the adhesive layer is a layer for bonding the transfer film according to the present embodiment to the resin base material described later. The adhesive layer may be laminated on the surface of the soil resistant cured film in the transfer film according to the present embodiment not contacting the transparent base material film, or laminated on the surface of the resin base material on which the transfer film is laminated. Examples of the adhesive layer include layers of thermoplastic resin coating films containing a thermoplastic resin and layers of curable

coating films containing an active energy beam curable composition.

[Thermoplastic resin coating film layer]

Examples of a thermoplastic resin that forms the thermoplastic resin coating film layer include acrylic resins, chlorinated olefin-based resins, vinyl chloride-vinyl acetate-based copolymers, maleic acid-based resins, chlorinated rubber-based resins, cyclized rubber-based resins, polyamide-based resins, coumarone indene-based resins, ethylene-vinyl acetate-based copolymers, polyester-based resins, polyurethane-based resins, styrene-based resins, butyral resins, rosin-based resins, and epoxy-based resins. One of these may be used, or two or more thereof may be used in combination.

[Curable coating film layer]

Examples of an active energy beam curable composition used to form the curable coating film layer include compositions containing the compound having at least two (meth)acryloyloxy groups in the molecule (the crosslinking component) and added to the soil resistant composition described above, and compositions containing the photoinitiator.

[Function layer]

The transfer film according to the present embodiment can have a function layer laminated on the soil resistant cured film when necessary, the function layer including at least one layer selected from the low refractive index layer, the high refractive index layer, the hard coat layer, and the antistatic layer.

In the case where the function layer is laminated on the soil resistant cured film in the transfer film according to the present embodiment, the low refractive index layer and the high refractive index layer can be formed under the soil resistant cured film in order to give the anti-reflective function. However, if the soil resistant cured film has a low refractive index (hereinafter, referred to as the "soil resistant low refractive index film,"), the anti-reflective function can be given by two layers of the soil resistant cured film and the high refractive index layer.

Specific examples of a combination of the soil resistant cured film and the function layer that can be formed in the transfer film according to the present embodiment (soil resistant cured film/function layer) include soil resistant cured film/hard coat layer, soil resistant cured film/antistatic layer, soil resistant cured film/hard coat film layer/antistatic layer, soil resistant cured film/antistatic layer/hard coat layer, soil resistant cured filmllow refractive index layer/high refractive index layer, soil resistant cured film/low refractive index layer/high refractive index layer/hard coat layer, soil resistant low refractive index film/high refractive index layer, soil resistant low refractive index film/ high refractive index layer/ middle refractive index layer, soil resistant low refractive index film/antistatic layer, soil resistant low refractive index film/ high refractive index layer/hard coat layer, soil resistant low refractive index film/antistatic layer/hard coat layer, soil resistant low refractive index film/antistatic layer/high refractive index layer, soil resistant low refractive index film/high refractive index layer/antistatic layer, and soil resistant low refractive index film/hard coat layer.

The component that forms the low refractive index layer has preferably a refractive index of approximately 1.3 to 1.5. Examples of a curable composition for the low refractive index layer as a raw material for forming the low refractive index layer include curable compositions containing a condensation polymerized curable compound mainly including siloxane bonds such as alkoxysilane and alkylalkoxysilane. Specific examples of the condensation polymerized curable compound mainly including siloxane bonds include compounds in which part of the siloxane bond of the siloxane-based resin is replaced by at least one selected from a hydrogen atom, a hydroxyl group, an unsaturated group, and an alkoxyl group.

In the present embodiment, colloidal silica is preferably added to the curable composition for the low refractive index layer because the refractive index of the low refractive index layer can be significantly reduced. Examples of colloidal silica include a colloid solution prepared by dispersing at least one kind of fine particles selected from porous silica fine particles and non-porous silica fine particles in a disperse medium. Examples of porous silica include low density silicas that are porous or hollow within particles and contain air within the particles. The refractive index of hollow silica is 1.20 to 1.40, and is lower than the refractive index of ordinary silica of 1.45 to 1.47. Accordingly, in the present embodiment, hollow silica is preferably used to reduce the refractive index of the low refractive index layer.

In the transfer film according to the present embodiment, in the case where the low refractive index layer is laminated under the soil resistant cured film, the total film thickness of the soil resistant cured film and the low refractive index layer is preferably 50 to 200 nm, and more preferably 70 to 150 nm from the viewpoint of sufficiently suppressing the visible reflected light of the wavelength.

Preferably, the component that forms the high refractive index layer has a refractive index approximately 1.55 to 2.0. Examples of the compound for forming the high refractive index layer as a raw material for forming the high refractive index layer include metal alkoxides that are hydrolyzed by themselves to form a metal oxide and can form a

fine film. Specific examples of the metal alkoxides include a compound represented by the following formula (3).

$$M(OR)_m \qquad \text{Formula (3)}$$

(wherein M represents a metal; R represents a hydrocarbon group having 1 to 5 carbon atoms; m represents a valence of the metal M, and the valence is 3 or 4.)

Examples of the metal M include titanium, aluminum, zirconium, and tin. Among these, titanium is preferred, Specific examples of metal alkoxides represented by the formula (3) include titanium methoxide, titanium ethoxide, titanium n-propoxide, titanium isopropoxide, titanium n-butoxide, titanium isobutoxide, aluminum ethoxide, aluminum isopropoxide, aluminum butoxide, aluminum t-butoxide, tin t-butoxide, zirconium ethoxide, zirconium n-propoxide, zirconium isopropoxide, and zirconium n-butoxide. One of these may be used, or two or more thereof may be used in combination.

In the present embodiment, in the case where the metal alkoxide that can form a metal oxide is used, metal oxide fine particles of tin oxide, tin oxide doped with antimony (ATO), indium oxide, indium oxide doped with tin (ITO), zinc oxide, zinc oxide doped with aluminum, zinc antimonate, and antimony pentoxide can be added to the metal alkoxide. Among these metal oxide fine particles, preferably, at least one kind of metal oxide fine particles having a high refractive index is blended with the compound for forming the high refractive index layer because the refractive index of the high refractive index layer can be higher. These metal oxide fine particles are also preferred from the viewpoint of giving the antistatic function to the resin laminate according to the present embodiment because the metal oxide fine particles have an antistatic ability.

In the present embodiment, other than the compounds above, examples of the compound for forming the high refractive index layer as the raw material for forming the high refractive index layer include a composition in which metal oxide fine particles having a high refractive index are blended in the same active energy beam curable composition as that of the raw material for forming the adhesive layer. The composition is preferred from the viewpoint of high productivity. In the case where the compound containing the active energy beam curable composition is used as the compound for forming the high refractive index layer, the compound can be cured by a known curing method. In this case, surface-treated metal oxide fine particles having a high refractive index are preferably used as the metal oxide fine particles having a high refractive index.

The film thickness of the high refractive index layer is preferably 0.1 to 10 $\mu$m. At a film thickness in the range, the surface of the resin laminate according to the present embodiment is likely to have good surface hardness, and the resin laminate according to the present embodiment is likely to have high transparency. Moreover, at a film thickness in this range, a high antistatic ability is likely to be given also in the case where the antistatic layer is provided in the resin laminate according to the present embodiment to give the antistatic function.

Examples of the component that forms the antistatic layer include $\pi$ electron conjugated conductive organic compounds, electron-conductive compounds such as conductive fine particles, and ion-conductive organic compounds. Among these, preferred are $\pi$ electron conjugated conductive organic compounds and electron-conductive compounds such as conductive fine particles because these compounds are hardly subjected to environmental change, have stable conductivity, and can demonstrate high conductivity particularly under a low humidity environment.

Specific examples of the $\pi$ electron conjugated conductive organic compounds include aliphatic conjugated polyacetylenes, aromatic conjugated poly(para-phenylene), heterocyclic conjugated polypyrroles and polythiophenes, hetero atom-containing conjugated polyanilines, and mixed conjugated poly(phenylene vinylene). Among these, polythiophenes are preferred.

Specific examples of the conductive fine particles include carbon-based fine particles, metal-based fine particles, metal oxide-based fine particles, and conductive coating-based fine particles.

Specific examples of the carbon-based fine particles include carbon powders such as carbon black, ketjen black, and acetylene black, carbon fibers such as PAN-based carbon fibers and pitch-based carbon fibers, and carbon flakes that are crushed products of expanded graphite.

Examples of metal-based fine particles include metals such as aluminum, copper, gold, silver, nickel, chromium, iron, molybdenum, titanium, tungsten, and tantalum, powders of alloys containing these metals and metal flakes thereof, and metal fibers of iron, copper, stainless steel, silver-plated copper, and brass.

Examples of the metal oxide-based fine particles include tin oxide, tin oxide doped with antimony (ATO), indium oxide, indium oxide doped with tin (ITO), zinc oxide, zinc oxide doped with aluminum, zinc antimonate, and antimony pentoxide.

Examples of conductive coating-based fine particles include conductive fine particles in which surfaces of various fine particles of spherical or acicular titanium oxide, potassium titanate, aluminum borate, barium sulfate, mica, and silica are coated with an antistatic component such as tin oxide, ATO, and ITO, and resin fine particles of polystyrenes, acrylic resins, epoxy resins, polyamide resins, polyurethane resins surface-treated with a metal such as gold and nickel.

One of the conductive fine particles can be used alone, or two or more thereof can be used in combination.

Among the conductive fine particles, preferred are metal-based fine particles of gold, silver, a silver/palladium alloy, copper, nickel, and aluminum, and metal oxide-based fine particles of tin oxide, ATO, ITO, zinc oxide, zinc oxide doped with aluminum, the metal-based fine particles and the metal oxide-based fine particles being electron-conductive. Among these, more preferred are the metal oxide-based fine particles.

The mass average particle size of a primary particle of the conductive fine particles is preferably 1 to 200 nm, more preferably 1 to 150 nm, still more preferably 1 to 100 nm, and particularly preferably 1 to 80 nm. The average particle size of the conductive fine particles can be measured by a light scattering method or a method by electron microscopic photograph observation.

In the case where the antistatic layer is formed, the surface resistance value of the resin laminate on the soil resistant cured film side described later is preferably not more than $10^{10}$ Ω/□, and more preferably not more than $10^{8}$ Ω/□. In the case where the active energy beam curable compound is contained as the component for forming the antistatic layer, the active energy beam curable compound can be cured by a known curing method.

In order to improve strength of the interface, aminosilane, for example, N-2-(aminoethyl)-3-aminopropylmethyldimethoxysilane, N-2-(aminoethyl)-3-aminopropyltrimethoxysilane, or N-2-(aminoethyl)-3-aminopropyltriethoxysilane may be added to the high refractive index layer.

Examples of the raw material for forming the hard coat layer include radically curable compounds containing an active energy beam curable compound and condensed curable compounds containing a condensation polymerization-type curable compound such as alkoxysilane and alkylalkoxysilane. One of these curable compounds can be used alone, or two or more thereof can be used in combination.

The curable compound can be cured, for example, by irradiation with an active energy beam such as electron beams, radiation, and ultraviolet rays or by heating. In the present embodiment, in the case where the radically curable compound containing an active energy beam curable compound is used for the hard coat layer, a method of curing the radically curable compound by ultraviolet rays is preferred from the viewpoint of productivity and physical properties.

Examples of an active energy beam curable composition for the hard coat layer include the compounds having at least two (meth)acryloyloxy groups in the molecule and the active energy beam curable composition containing the photoinitiator, which are described above.

The amount of the photoinitiator to be added is preferably not less than 0.1 parts by mass from the viewpoint of curability by irradiation with ultraviolet rays, and preferably not more than 10 parts by mass from the viewpoint of keeping the good color tone of the hard coat layer to be obtained, based on 100 parts by mass of the active energy beam curable compound in the active energy beam curable composition for the hard coat layer.

When necessary, a variety of additives such as a slip property improving agent, a leveling agent, inorganic fine particles, an ultraviolet absorbing agent, and a light stabilizer such as HALS can be added into the active energy beam curable composition for the hard coat layer. The amount of the additives to be added is preferably not more than 10 parts by mass based on 100 parts by mass of the active energy beam curable composition for the hard coat layer from the viewpoint of transparency of the resin laminate to be obtained.

The film thickness of the hard coat layer is preferably 1 to 20 μm, At a film thickness of the hard coat layer in the range, the film is likely to have sufficient surface hardness, little warpage caused by the hard coat layer, and a good appearance.

[Liquid organic compound]

Examples of a liquid organic compound used in the present embodiment include at least one liquid organic compound selected from alcohols, esters, ketones, and ethers. The liquid refers to the state at normal temperature and normal pressure. The liquid organic compound is applied to the surface of the soil resistant film, and volatilized to obtain a resin laminate showing high water repellency and oil repellency in spite of a small content of the monomer (A) containing a perfluoropolyether group and a nitrogen atom in the soil resistant composition.

Examples of alcohols include methanol, ethanol, n-propanol, i-propanol, n-butanol, i-butanol, sec-butanol, t-butanol, n-pentanol, i-pentanol, 2-methylbutanol, sec-pentanol, t-pentanol, 3-methoxybutanol, n-hexanol, 2-methylpentanol, sec-hexanol, 2-ethylbutanol, sec-heptanol, n-octanol, 2-ethylhexanol, sec-octanol, n-nonylalcohol, n-decanol, sec-undecyl alcohol, trimethyl nonyl alcohol, sec-tetradecyl alcohol, sec-heptadecyl alcohol, phenol, cyclohexanol, methylcyclohexanol, benzyl alcohol, ethylene glycol, 1,2-propylene glycol, 1,3-butylene glycol, diethylene glycol, dipropylene glycol, triethylene glycol, tripropylene glycol, and 1-methoxy-2-propanol. Among these, preferred are ethanol, i-propanol, and 1-methoxy-2-propanol, and more preferred is i-propanol from the viewpoint of the water repellency and oil repellency of the surface of the resin laminate to be obtained.

Examples of ketones include acetone, methyl ethyl ketone, methyl-n-propyl ketone, methyl-n-butyl ketone, methyl-i-butyl ketone, methyl-n-pentyl ketone, methyl-n-hexyl ketone, diethyl ketone, di-i-butyl ketone, trimethyl nonanone, cyclohexanone, cyclopentanone, methylcyclohexanone, 2,4-pentanedione, acetonylacetone, diacetone alcohol, acetophenone, and γ-butyrolactone. Among these, preferred is methyl-i-butyl ketone from the viewpoint of the water

repellency and oil repellency of the surface of the resin laminate to be obtained.

Examples of ethers include ethyl ether, i-propyl ether, n-butyl ether, n-hexyl ether, 2-ethylhexyl ether, ethylene oxide, 1,2-propylene oxide, dioxolane, 4-methyldioxolane, dioxane, dimethyldioxane, ethylene glycol monomethyl ether, ethylene glycol monoethyl ether, ethylene glycol mono-n-butyl ether, ethylene glycol diethyl ether, ethylene glycol mono-n-hexyl ether, ethylene glycol monophenyl ether, ethylene glycol dibutyl ether, diethylene glycol monoethyl ether, diethylene glycol diethyl ether, diethylene glycol diethyl ether, diethylene glycol mono-n-butyl ether, diethylene glycol di-n-butyl ether, diethylene glycol mono-n-hexyl ether, ethoxytriglycol, tetra ethylene glycol di-n-butyl ether, propylene glycol monomethyl ether, propylene glycol monoethyl ether, propylene glycol monopropyl ether, dipropylene glycol monomethyl ether, dipropylene glycol monoethyl ether, tripropylene glycol monomethyl ether, tetrahydrofuran, and 2-methyltetrahydrofuran. Among these, preferred is ethylene glycol mono-n-butyl ether (butyl cellosolve) from the viewpoint of the water repellency and oil repellency of the surface of the resin laminate to be obtained.

Examples of esters include methyl acetate, ethyl acetate, n-propyl acetate, i-propyl acetate, n-butyl acetate, i-butyl acetate, sec-butyl acetate, n-pentyl acetate, sec-pentyl acetate, 3-methoxybutyl acetate, methylpentyl acetate, 2-ethylbutyl acetate, 2-ethylhexyl acetate, benzyl acetate, cyclohexyl acetate, methylcyclohexyl acetate, nonyl acetate, γ-butyrolactone, γ-valerolactone, methyl acetoacetate, ethyl acetoacetate, ethylene glycol monomethyl ether acetate, ethylene glycol monoethyl ether acetate, diethylene glycol monomethyl ether acetate, diethylene glycol monoethyl ether acetate, diethylene glycol mono-n-butyl ether acetate, propylene glycol monomethyl ether acetate, propylene glycol monoethyl ether acetate, propylene glycol monopropyl ether acetate, dipropylene glycol monomethyl ether acetate, dipropylene glycol monoethyl ether acetate, glycol diacetate, methoxytriglycol acetate, ethyl propionate, n-butyl propionate, i-amyl propionate, diethyl oxalate, di-n-butyl oxalate, methyl lactate, ethyl lactate, n-butyl lactate, n-amyl lactate, methyl (meth)acrylate, ethyl (meth)acrylate, n-propyl (meth)acrylate, i-propyl (meth)acrylate, n-butyl (meth)acrylate, i-butyl (meth)acrylate, and t-butyl (meth)acrylate. Among these, preferred is methyl methacrylate from the viewpoint of the water repellency and oil repellency of the surface of the resin laminate to be obtained.

One of these compounds can be used alone, or two or more thereof can be used in combination. In the present embodiment, the boiling point of the liquid organic compound at normal pressure is preferably not more than 200°C. In the present embodiment, when necessary, a variety of additives such as a slip property improving agent, a leveling agent, an ultraviolet absorber, a light stabilizer such as HALS, a photoinitiator, a thermal initiator, amines, inorganic fine particles, organic fine particles, and a binder can be added into the liquid organic compound.

[Transfer film]

The transfer film according to the present embodiment includes the soil resistant cured film laminated on the surface of the transparent base material film. The transfer film according to the present embodiment can include the adhesive layer laminated on the surface of the soil resistant cured film not contacting the transparent base material film, when necessary.

Moreover, the transfer film according to the present embodiment can include the function layer laminated on the surface of the soil resistant cured film not contacting the transparent base material film, when necessary. Further, the transfer film according to the present embodiment can include the adhesive layer laminated on the surface of the function layer, when necessary.

In the present embodiment, a known protective film can be laminated on the surface of the transfer film not contacting the transparent base material film, when necessary.

[Resin base material]

Examples of a resin base material used in the present embodiment include polymethyl methacrylate, polycarbonate, copolymers containing a methyl methacrylate unit as a main constituent component, and molded products of polystyrene and styrene-methyl methacrylate copolymers. When necessary, the resin base material can contain additives such as a coloring agent and a light diffusing agent. The thickness of the resin laminate is preferably not less than 0.2 mm from the viewpoint of mechanical strength, and preferably not more than 10 mm from the viewpoint of productivity.

[Resin laminate]

The resin laminate according to the present embodiment is a laminate in which a cured coating film layer as the cured film of the adhesive layer and the soil resistant cured film are sequentially laminated on the surface of the resin base material. Namely, the resin laminate according to the present embodiment is a laminate obtained by adhering the adhesive layer of the transfer film to the resin base material, and removing the transparent base material film. In the present embodiment, when necessary, a function layer can be formed between the cured coating film layer and the soil resistant cured film.

In the resin laminate according to the present embodiment, the water contact angle (2) of the exposed surface of the soil resistant cured film is not less than 90°, and the contact angle (α) of triolein is not less than 55°. Thereby, soil such as fingerprints, sebum, and makeup foundation is not prominent.

In the case where the resin laminate according to the present embodiment includes a layer having the anti-reflective function laminated as the function layer, preferably, the water contact angle (2) of the surface of the resin laminate is not less than 95°, and the contact angle (α) of triolein is not less than 60° because prominent change of the reflected color and reduction of visibility of an image display member are difficult to occur when the soil adheres.

In the resin laminate according to the present embodiment, the composition ratio (N/F) of a nitrogen atom (N) to a fluorine atom (F) on the exposed surface of the soil resistant cured film, which is obtained by X-ray photoelectron spectroscopic analysis, is preferably not more than 0.110 because the soil such as fingerprints, sebum, and makeup foundation on the surface of the soil resistant cured film can be made less prominent. Hereinafter, a method for producing a transfer film and the method for producing a resin laminate will be described in detail.

[Soil resistant film forming step]

Examples of a method for forming a soil resistant film on a surface of a transparent base material film, the soil resistant film being a coating film layer of a soil resistant composition for forming a soil resistant cured film, include the following method. First, the soil resistant composition is applied. When the soil resistant composition contains a diluent solvent, the diluent solvent is dried and removed to form a soil resistant film.

Examples of a method of applying the soil resistant composition to the surface of the transparent base material film include a casting method, a gravure coating method, a reverse gravure coating method, a vacuum slot die coating method, a roller coating method, a bar coating method, a spray coating method, an air knife coating method, a spin coating method, a flow coating method, a curtain coating method, a film covering method, and a dipping method.

[Soil resistant cured film forming step]

The soil resistant film formed in the soil resistant film forming step is subjected to cure treatment in the soil resistant cured film forming step, for example, by at least one curing method selected from a thermally curing method and an active energy beam curing method, to form a soil resistant cured film. Thereby, a transfer film is obtained. The water contact angle (1) of the surface of the soil resistant cured film not contacting the transparent base material film is not more than 100°, the water contact angle (2) of the surface of the soil resistant cured film contacting the transparent base material film is not less than 90°, and a contact angle (α) of triolein is not less than 55°.

In the case where the soil resistant cured film is formed by an active energy beam curing method, examples of the active energy beam include electron beams, radiation, and ultraviolet rays. Examples of the condition on the active energy beam curing include the curing condition of a peak illuminance of 1 to 1000 $mW/cm^2$ and an accumulated light amount of 1 to 1000 $mJ/cm^2$ in the presence of air.

Examples of a stage in which the soil resistant film is cured to form a soil resistant cured film include a stage previous to a stage in which the transfer film is laminated on the resin base material.

The thermoplastic resin coating film layer or curable coating film layer laminated on the transfer film may be subjected to at least one treatment selected from a heating treatment and a curing treatment, to cure a partially cured product in the soil resistant cured film when the adhesive layer or the cured film of the adhesive layer is formed. Alternatively, a partially cured product in the soil resistant cured film may be cured when the material for forming the function layer in the function layer forming step when the function layer is laminated on the transfer film is subjected to at least one treatment selected from the heating treatment and the curing treatment. Further, a partially cured product in the soil resistant cured film may be cured in both of the step of forming the adhesive layer or the cured film of the adhesive layer and the function layer forming step.

[Liquid organic compound applying step]

After the soil resistant film forming step, followed by a liquid organic compound applying step and a volatilizing step, a soil resistant cured film forming step can be performed. In the liquid organic compound applying step, the liquid organic compound is applied onto the surface of the soil resistant film on the transparent base material film having the soil resistant film formed thereon, to form a coating film of the liquid organic compound.

Examples of a method for applying the liquid organic compound onto the surface of the soil resistant film include a casting method, a gravure coating method, a reverse gravure coating method, a vacuum slot die coating method, a roller coating method, a bar coating method, a spray coating method, an air knife coating method, a spin coating method, a flow coat method, a curtain coating method, a film covering method, and a dipping method. Among these, preferred are non-contact methods such as the vacuum slot die coating method, the spray coating method, the air knife coating

method, the spin coating method, the flow coating method, the curtain coating method, and the dipping method from the viewpoint of suppressing damage of the soil resistant film.

[Volatilizing step]

In a volatilizing step in the present embodiment, the liquid organic compound applied onto the surface of the soil resistant film is volatilized. Examples of a method for volatilizing the liquid organic compound include a method of volatilizing the liquid organic compound at a temperature not less than room temperature and under normal pressure or reduced pressure. The liquid organic compound may not be completely volatilized, and may partially remain.

[Adhesive layer forming step]

In an adhesive layer forming step in the present embodiment, a thermoplastic resin coating film layer or a curable coating film layer as an adhesive layer can be formed on the surface of the soil resistant cured film of the transfer film or the surface of the function layer in the case where the transfer film has the function layer.

As the adhesive layer forming material used for forming the thermoplastic resin coating film layer, for example, a thermoplastic resin solution prepared by dissolving a thermoplastic resin in a solvent can be used. Examples of the solvent used to dissolve a thermoplastic resin include methyl ethyl ketone, methyl isobutyl ketone, isopropanol, ethanol, 1-methoxy-2-propanol, and toluene,

Examples of a method of forming a thermoplastic resin coating film layer include a method in which a thermoplastic resin solution is applied onto the surface of the soil resistant cured film of the transfer film or the surface of the function layer in the case where the transfer film has the function layer, and the solvent is removed to form a thermoplastic resin coating film layer. Examples of a method of applying a thermoplastic resin solution include the method of applying the soil resistant composition.

In the present embodiment, the thermoplastic resin coating film layer can also be formed on the surface of the resin base material. In this case, the thermoplastic resin solution is applied onto the surface of the resin base material, and the solvent is removed. Thereby, the thermoplastic resin coating film layer can be formed.

In the case where the active energy beam curable composition is used to form the adhesive layer, examples of a method of forming a curable coating film layer containing the active energy beam curable composition include a method in which the active energy beam curable composition is applied onto the surface of the soil resistant cured film of the transfer film, the surface of the function layer in the case where the transfer film has the function layer, or the surface of the resin base material on which the transfer film is laminated, thereby to laminate the curable coating film layer. Examples of a method of forming the curable coating film layer include the same method as the method of forming the thermoplastic resin coating film layer described above.

[Function layer forming step]

In the present embodiment, in the case where other than the soil resistant function, a variety of functions such as the anti-reflective function, the scratch resistance function, and the antistatic function are given as the transfer film, the soil resistant cured film can be formed on the surface of the transparent base material film in the function layer forming step, and the function layer can be formed on the surface of the soil resistant cured film.

Examples of a method of applying a material for forming the function layer onto the surface of the soil resistant cured film include the method of applying the soil resistant composition. A coating film obtained by applying the material for forming the function layer is subjected to at least one treatment selected from a heat treatment, a solvent volatilizing treatment, and a variety of curing treatments according to the kind of the coating film, thereby to form the function layer.

[Resin base material laminate product]

In the present embodiment, a resin base material laminate product is a laminate product in which the thermoplastic resin coating film layer as the adhesive layer, the soil resistant cured film, and the transparent base material film are sequentially laminated on the surface of the resin base material, or a laminate product in which the thermoplastic resin coating film layer as the adhesive layer, the function layer, the soil resistant cured film, and the transparent base material film are sequentially laminated on the surface of the resin base material.

[Resin base material laminate product forming step]

In the present embodiment, in the case where the thermoplastic resin coating film layer is used as the adhesive layer, the thermoplastic resin coating film layer of the transfer film is bonded to the resin base material in a resin base

material laminate product forming step to produce a resin base material laminate product. The thermoplastic resin coating film layer may be provided on the transfer film in advance, or may be provided on the resin base material in advance.

Examples of a method of bonding the resin base material to the transfer film include a method of pressure-bonding the resin base material to the transfer film by a rubber roll. In the pressure-bonding, for example, the pressure-bonding can be performed on the condition of 5 to 15 MPa. Moreover, from the viewpoint of adhesion to the transfer film, the surface of the resin base material to be bonded is preferably heated to 40 to 125˚C.

[Active energy beam curable resin base material laminate product]

In the present embodiment, an active energy beam curable resin base material laminate product is a laminate product in which the layer of the curable coating film containing the active energy beam curable composition as the adhesive layer, the soil resistant cured film, and the transparent base material film are sequentially laminated on the surface of the resin base material, or a laminate product in which the layer of the curable coating film containing the active energy beam curable composition as the adhesive layer, the function layer, the soil resistant cured film, and the transparent base material film are sequentially laminated on the surface of the resin base material.

[Active energy beam curable resin base material laminate product forming step]

In the present embodiment, in the case where the layer of the curable coating film containing an active energy beam curable composition is used as the adhesive layer, the layer of the curable coating film of the transfer film is bonded to the resin base material in an active energy beam curable resin base material laminate product forming step to obtain an active energy beam curable resin base material laminate product. The layer of the curable coating film may be provided on the transfer film in advance, or may be provided on the resin base material in advance.

In order to prevent involvement of the air when the resin base material is adhered to the transfer film, preferably, an excessive amount of the material for forming the layer of the curable coating film is used to form the layer of the curable coating film. Examples of a method of adhering the resin base material to the transfer film include the same method as the method of using the thermoplastic resin coating film layer as the adhesive layer.

[Thermoplastic resin coating film layer-containing transfer film laminate]

In the present embodiment, a thermoplastic resin coating film layer-containing transfer film laminate is a product in which the thermoplastic resin coating film layer as the adhesive layer, the soil resistant cured film, and the transparent base material film are sequentially laminated on the surface of the resin base material and integrated, or a product on which the thermoplastic resin coating film layer as the adhesive layer, the function layer, the soil resistant cured film, and the transparent base material film are sequentially laminated on the surface of the resin base material and integrated.

[Thermoplastic resin coating film layer-containing transfer film laminate forming step]

In the present embodiment, in a thermoplastic resin coating film layer-containing transfer film laminate forming step, the resin base material laminate product obtained in the resin base material laminate product forming step is subjected to at least one treatment selected from a pressure applying treatment and a heating treatment to integrate the resin base material, the thermoplastic resin coating film layer as the adhesive layer, and the soil resistant cured film or the function layer.

Examples of a method for applying pressure include a method of pressure-bonding by a rubber roll. Examples of the condition in applying pressure include 5 to 15 Mpa. Examples of a heating treatment method include a method of heating the resin base material. Examples of the heating condition include 40 to 125˚C. If the heating condition is the condition above, adhesion between the transfer film and the resin base material can be increased, hardness is not reduced by excessive dissolution of the resin base material, and change in the color of the thermoplastic resin coating film layer to yellow is likely to be reduced.

The temperature of the surface of the resin base material when the resin base material is heated can be adjusted depending on the setting temperature in a portion to be heated, the heating time, and the like. Moreover, examples of a method for measuring the temperature of the resin base material include a method using a non-contact surface thermometer.

In the present embodiment, the thermoplastic resin coating film layer-containing transfer film laminate forming step and the resin base material laminate product forming step may be performed at the same time.

In the present embodiment, when necessary, curing of the soil resistant cured film can be progressed during the heating treatment to obtain a sufficiently cured soil resistant cured film. Moreover, in the present embodiment, when necessary, in addition to the treatment, curing of the soil resistant cured film can be progressed by irradiation with an

active energy beam to obtain a sufficiently cured soil resistant cured film.

[Cured coating film layer-containing transfer film laminate]

In the present embodiment, a cured coating film layer-containing transfer film laminate is a laminate in which the cured coating film layer as the cured film of the adhesive layer, the soil resistant cured film, and the transparent base material film are sequentially laminated on the surface of the resin base material, or a laminate in which the cured coating film layer as the cured film of the adhesive layer, the function layer, the soil resistant cured film, and the transparent base material film are sequentially laminated on the surface of the resin base material. The cured coating film layer is obtained by curing the layer of the curable coating film containing the active energy beam curable composition and used as the adhesive layer.

[Cured coating film layer-containing transfer film laminate forming step]

In the present embodiment, in a cured coating film layer-containing transfer film laminate forming step, the active energy beam curable resin base material laminate product obtained in the active energy beam curable resin base material laminate product forming step can be irradiated with an active energy beam to form a cured coating film layer.
The active energy beam curable resin base material laminate product can be irradiated with the active energy beam through the transfer film. Alternatively, depending on the shape of the resin base material, the active energy beam curable resin base material laminate product may be irradiated with the active energy beam from the resin base material side when necessary.
Examples of the active energy beam for forming the cured coating film layer include ultraviolet rays. Examples of a light source in the case of irradiation with ultraviolet rays include a high pressure mercury lamp, a metal halide lamp, and a fluorescent ultraviolet lamp. Examples of the condition in irradiation with the active energy beam for forming the cured coating film layer include a condition of a peak illuminance of not less than 100 $mW/cm^2$ and an accumulated light amount of not less than 10 $mJ/cm^2$.
In the present embodiment, in formation of the cured coating film layer, curing of the soil resistant cured film can be progressed to obtain a sufficiently cured soil resistant cured film, when necessary.

[Resin laminate forming step]

A resin laminate according to the present embodiment is obtained by removing the transparent base material film from the thermoplastic resin coating film layer-containing transfer film laminate or the cured coating film layer-containing transfer film laminate in a resin laminate forming step.
When the transparent base material film is peeled from the thermoplastic resin coating film layer-containing transfer film laminate or the cured coating film layer-containing transfer film laminate, for example, the transparent base material film can be peeled from the thermoplastic resin coating film layer-containing transfer film laminate at room temperature by a known method.
The resin laminate obtained using the transfer film according to the present embodiment can be suitably used for front panels for image display members used outdoor and front panels for mobile phones, Personal Digital Assistants, notebook personal computers, and the like, to which fingerprints, sebum, and makeup foundation are easy to adhere, for example.

Examples

Hereinafter, according to Examples, the present embodiment will be described. Abbreviations of the compounds used in Examples and Comparative Examples are as follows. Moreover, hereinafter, "parts" and "%" respectively represent "parts by mass" and "% by mass." "TAS": succinic acid/trimethylol ethane/acrylic acid(molar ratio of 1/2/4) condensation mixture (made by OSAKA ORGANIC CHEMICAL INDUSTRY LTD.)
"C6DA": 1,6-hexanediol diacrylate (made by OSAKA ORGANIC CHEMICAL INDUSTRY LTD., trade name)
"M305": pentaerythritol triacrylate (made by TOAGOSEI CO., LTD., trade name)
"M400": dipentaerythritol hexaacrylate (made by TOAGOSEI CO., LTD., trade name)
"OPTOOL DAC": a solution of a fluorinated-group containing polyether compound having a perfluoropolyether group and an active energy beam reactive group (made by DAIKIN INDUSTRIES, LTD., the concentration of the solid content of 20%, a 2,2,3,3-tetrafluoro-1-propanol solution, trade name) "DAROCUR TPO": 2,4,6-trimethylbenzoyl-diphenyl-phosphine oxide (made by Ciba Inc., trade name)
"IRGACURE 819": bis(2,4,6-trimethylbenzoyl)-phenylphosphine oxide (made by Ciba Inc., trade name)
"IRGACURE 907": 2-methyl-1-(4-methylthiophenyl)-2-morpholinopropane-1-one (made by Ciba Inc., trade name)

"KBM503": 3-methacryloxypropyltriethoxysilane (made by Shin-Etsu Chemical Co., Ltd., trade name)
"THRULYA S": isopropyl alcohol (IPA) dispersion of hollow silica sol (the concentration of the solid content of 20%) (made by JGC Catalysts and Chemicals Ltd., trade name)
"PGM": 1-methoxy-2-propanol (made by Wako Pure Chemical Industries, Ltd., trade name)
"IPA": i-propanol (made by Wako Pure Chemical Industries, Ltd.) "ethanol": (made by Wako Pure Chemical Industries, Ltd.) "MIBK": methyl-iso-butylketone (made by Wako Pure Chemical Industries, Ltd.) "butyl cellosolve": ethylene glycol mono-n-butyl ether (made by Wako Pure Chemical Industries, Ltd.)
"MMA": methyl methacrylate (made by MITSUBISHI RAYON CO., LTD.) "toluene": (made by Wako Pure Chemical Industries, Ltd.) "n-hexane": (made by Wako Pure Chemical Industries, Ltd.) "ELCOM MR-1009 SBV P-30": IPA dispersion of antimony pentoxidesol (made by JGC Catalysts and Chemicals Ltd., trade name)
"ACRYLITE EX001": a methacrylic resin plate (made by MITSUBISHI RAYON CO., LTD., trade name)
"Panlite AD-5503": a polycarbonate resin plate (made by Teijin Chemicals Ltd., trade name)
"Tosguard 510": a thermally curable water repellent hard coat coating material (the concentration of the solid content of 21 %) (made by Momentive Performance Materials Inc., trade name)
"PH-91 ": a primer coating material (the concentration of the solid content of 4%) (made by Momentive Performance Materials Inc., trade name).

Evaluation methods performed in the present embodiment are shown below.

(1) Temperature of resin base material

For measurement of the temperature of the surface of the resin base material, a non-contact surface thermometer (made by CHINO CORPORATION, a handheld type radiation thermometer IR-TA (trade name)) was used.

(2) Total light transmittance and haze value

Using a HAZE METER NDH2000 (trade name) made by Nippon Denshoku Industries Co., Ltd., the total light transmittance of the resin laminate was measured according to the measurement method shown in JIS K7301-1, and the haze value was measured according to the measurement method shown in JIS K7136.

(3) Scratch resistance

(Scratch resistance evaluation method 1)

A circular pad having a diameter of 25.4 mm to which a #0000 steel wool was attached was placed on the surface of the soil resistant cured film of the resin laminate. The surface of the soil resistant cured film was reciprocally scratched 10 times under a load of 1 kg at a distance of 20 mm. The difference (ΔHaze) between the haze value before scratching and that after scratching was determined from the following expression. The number of scratches of the surface of the sample after the test was counted, and the scratch resistance was evaluated.

$$[\Delta \text{haze } (\%)] = [\text{haze value after scratching}(\%)] - [\text{haze value before scratching}(\%)]$$

(Scratch resistance evaluation method 2)

A circular pad having a diameter of 25.4 mm to which a #0000 steel wool was attached was placed on the surface of the soil resistant cured film of the resin laminate. The surface of the soil resistant cured film was reciprocally scratched 20 times under a load of 1 kg at a distance of 20 mm. The difference (Δhaze) between the haze value before scratching and that after scratching was determined from the following expression. The number of scratches of the surface of the sample after the test was counted, and the scratch resistance was evaluated.

$$[\Delta \text{Haze } (\%)] = [\text{haze value after scratching } (\%)] - [\text{haze value before scratching } (\%)].$$

(4) Anti-reflective properties

A surface of the resin laminate after transfer on which the soil resistant cured film was not laminated was roughened by a sandpaper, and was coated with a frosting black spray. This was used as a sample to be evaluated. Using a spectrophotometer (made by Hitachi, Ltd., trade name: U-4000), the reflectance of the surface of the soil resistant cured film of the sample was measured at an angle of incidence of 5° and a wavelength in the range of 380 to 780 nm according to the measurement method shown in JIS R3106. The wavelength having the lowest reflectance in the reflectance curve to be obtained (bottom wavelength) and the reflectance at the bottom wavelength (bottom wavelength reflectance) were determined. Moreover, presence of change in the reflected color when fingerprints adhered to the surface of the soil resistant cured film of the resin laminate was evaluated on the criterion below.

⊙; no change in the reflected color is found.
○: change in the reflected color is slightly found.
×: change in the reflected color is found.

(5) Soil resistance

The soil resistance of the soil resistant cured film was evaluated according to the water contact angle, the contact angle of triolein, and oil ink wiping properties below,

(a) Water contact angle

Under an environment of 23°C and relative humidity of 50%, a drop of 0.2 μL of ion exchange water was dropped onto the surface of the soil resistant cured film. Using a portable contact angle meter (made by Fibro system ab, trade name: PG-X), the contact angle of water to the soil resistant cured film was measured to determine the water contact angle. The water contact angle (1) was obtained by measuring the contact angle of the surface of the soil resistant cured film of the transfer film, and the water contact angle (2) was obtained by measuring the contact angle of the surface of the soil resistant cured film of the resin laminate after transfer.

(b) Contact angle of triolein

The contact angle of triolein was determined in the same manner as in the measurement of the water contact angle except that triolein was used instead of ion exchange water. The contact angle (α) of triolein was obtained by measuring the contact angle of the surface of the soil resistant cured film of the resin laminate after transfer.

(c) Oil ink wiping properties

A line was drawn on the surface of the soil resistant cured film of the resin laminate after transfer with a "MY NAME" (black) (made by SAKURA COLOR PRODUCTS CORPORATION, trade name) as an oil ink. After 3 minutes, the line was wiped out with a "Kimtowel" (made by NIPPON PAPER CRECIA Co., LTD., trade name). A degree of wiping out of the oil ink at that time was visually evaluated on the criterion below.

⊙: the oil ink can be completely wiped out when the oil ink is wiped 5 times.
○: a trace of the line of the oil ink is slightly left when the oil ink is wiped 5 times.
×: part or all of the oil ink is left adhered when the oil ink is wiped 5 times.

(6) Adhesion

According to JIS K5600-5-6, peeling evaluation with a 25-square crosscut pattern was performed at 4 places, and the adhesion of the soil resistant cured film of the resin laminate was evaluated using the number of the squares which were left without being peeled off in the 100 squares.

(7) Film thickness of soil resistant cured film

A sample having a width of 100 nm was cut out in the thickness direction of the resin laminate with a microtome. The cross section of the resin laminate was observed by a transmission electron microscope (JEM-1010 (trade name) made by JEOL, Ltd.), and the film thickness of the soil resistant cured film was measured.

(8) Sweat resistance

According to a test method A for color fastness to sweat specified in JIS L0848, an artificial sweat solution was prepared. The resin laminate was cut into a size of 50 x 50 mm to obtain a sample to be evaluated. Next, absorbent cotton was cut into a size of 30 x 30 mm, and placed on the sample to be evaluated. Using a syringe, the artificial sweat solution was dropped onto the absorbent cotton to wet the absorbent cotton. The sample was left in a thermo-hygrostat at a temperature of 45˚C and relative humidity of 95% for 96 hours, and extracted. The surface of the resin laminate was washed by water, and the sweat resistance was evaluated by visual observation on the criterion below.

○: no change in color is found.
×: change in color is found.

(9) Surface resistance value of surface of soil resistant cured film

Using a super insulation resistance meter (made by DKK-TOA CORPORATION, trade name: ULTRA MEGOHMMETER MODEL SM-10E), a surface resistance value (Ω/□) was measured on the condition of the measurement temperature of 23˚C and relative humidity of 50% one minute after the surface of the soil resistant cured film of the resin laminate was electrically conducted at a voltage to be applied of 500 V. As the resin laminate to be measured, a resin laminate whose temperature and humidity were adjusted in advance at a temperature of 23˚C and a relative humidity of 50% for one day was used.

(10) State of interface with respect to soil resistant cured film, function layer, and cured coating film layer or thermoplastic resin coating film layer

A sample having a width of 100 nm was cut out in the thickness direction of the resin laminate with a microtome. The cross section of the resin laminate was observed by a transmission electron microscope (made by JEOL, Ltd., JEM-1010 (trade name)), the state of the interface with respect to the soil resistant cured film, the function layer, and the cured coating film layer or the thermoplastic resin coating film layer in the resin laminate was evaluated on the criterion below.

○ the interface clearly exists, and no unclear portion is found.
×: Unclear portions are found in the interface.

(11) Evaluation of composition ratio (N/F) of a nitrogen atom (N) to a fluorine atom (F) obtained by X-ray photoelectron spectroscopic analysis in surface of soil resistant cured film

The composition ratio (N/F) of a nitrogen atom (N) to a fluorine atom (F) in the surface of the soil resistant cured film of the resin laminate after transfer was measured by X-ray photoelectron spectroscopic analysis. The XPS spectrums of all the constituent elements (C1s, N1s, O1s, F1s, and Si2p) were obtained. Using the peak area value, the composition ratio was determined. From the obtained composition ratio, N/F was calculated. (Measurement apparatus: ESCA-LAB 220iXL made by Thermo Fisher Scientific Inc.; X-ray source: a monochromatic X-ray source using an Al target; voltage: 10 kV; filament current: 9B mA; degree of vacuum within sample chamber: $1 \times 10^{-9}$ Torr).

[Production Example 1] Production of Silica Sol (1) subjected to hydrolysis treatment and condensation reaction treatment

63 g of THRULYA S was placed in a 4-neck flask reaction container including a stirrer and a cooling tube, and then, 12 g of KBM503 was added. Subsequently, while stirring, 4.4 g of water and 0.1 g of a 0.01 mol/l hydrochloric acid aqueous solution were sequentially added, and heating was performed at 80˚C for 2 hours. Next, the pressure of the reaction system was reduced, and the volatile content was distilled until the concentration of the solid content reached 40%. Then, 38 g of toluene was added, and heating was performed at 80˚C for 2 hours. Subsequently, the pressure of the reaction system was reduced, and the volatile content was distilled until the concentration of the solid content reached 60%. Further, heating was performed at 80˚C for 2 hours to produce Silica Sol (1) subjected to the hydrolysis treatment and the condensation reaction treatment.

Silica Sol (1) was a cloudy liquid, and the concentration of the solid content was 60%. The concentration of the solid content was determined by heating and drying Silica Sol (1) for 3 days in an environment of 80˚C, and calculating the difference between the mass before drying and that after drying. Moreover, the proportion (%) of inorganic fine particles in Silica Sol (1) was determined from the mass proportion of the inorganic fine particles based on 100 parts of a total of the hydrolyzable silane compound and the inorganic fine particles used.

[Production Example 2] Production of Silica Sol (2) subjected to hydrolysis treatment and condensation reaction treatment

Silica Sol (2) subjected to the hydrolysis treatment and condensation reaction treatment was produced in the same manner as in Production Example 1 except that 8 g of KBM503 was added.

[Production Example 3] Production of Silica Sol (3) subjected to hydrolysis treatment and condensation reaction treatment

Silica Sol (3) subjected to the hydrolysis treatment and the condensation reaction treatment was produced in the same manner as in Production Example 1 except that 16 g of KBM503 was added.

[Production Examples 4 to 17] Preparation of Soil Resistant Compositions (1) to (14)

As the soil resistant composition, Soil Resistant Compositions (1) to (14) shown in Tables 1, 2, 3, 4, 6, and 7 were prepared. Soil Resistant Composition (9) was a thermally curable water repellent hard coat coating material solution prepared by diluting Tosguard 510 with PGM and having the concentration of the solid content of 1%.

[Example 1]

Soil Resistant Composition (1) was applied onto the surface of a PET film having a thickness of 100 μm and including a melamine release layer (made by Reiko Co., Ltd., trade name: AC-J) using a #10 bar coater, and dried at 80˚C for 15 minutes to form a soil resistant film. The critical surface tension of the melamine release layer was 44 mN/m. The film thickness of the soil resistant film was 93 nm based on the calculation from the concentration of the solid content of Soil Resistant Composition (1) and the amount and area of Soil Resistant Composition (1) to be applied.

The PET film having the soil resistant film laminated thereon was passed at a rate of 2.8 m/min 20 cm below from a lamp unit including two fluorescent ultraviolet lamps having an output of 40 W (made by TOSHIBA CORPORATION, trade name: FL40BL) and provided vertical to the traveling direction. Thereby, the soil resistant film was cured to form a soil resistant cured film. Thus, a transfer film was produced. As the ultraviolet rays curing condition at the time of forming the soil resistant cured film, the accumulated light amount was 10 mJ/$cm^2$, and the peak illuminance was 1.5 mW/$cm^2$. The water contact angle (1) of the surface of the soil resistant cured film of the produced transfer film was 82˚.

Next, 35 parts of TAS, 30 parts of C6DA, 10 parts of M305, 25 parts of M400, and 2 parts of DAROCUR TPO were mixed to prepare an active energy beam curable composition. Using the #10 bar coater, the active energy beam curable composition was applied onto the surface of the soil resistant cured film of the transfer film to form Adhesive Layer (1). No cissing defects were produced when Adhesive Layer (1) was formed on the surface of the soil resistant cured film.

The transfer film was layered on the surface of the resin base material heated to 60˚C through Adhesive Layer (1). As the resin base material, an ACRYLITE EX001 having a thickness of 2 mm was used. Next, using a rubber roll having a JIS hardness of 40˚, pressure-bonding was performed such that the thickness of Adhesive Layer (1) was 15 μm, by squeezing out the active energy beam curable composition in Adhesive Layer (1) so as to avoid involvement of air bubbles. Thus, an active energy beam curable resin base material laminate product was produced. The thickness of Adhesive Layer (1) was calculated from the amount of the active energy beam curable composition to be supplied and the area thereof to be spread.

The active energy beam curable resin base material laminate product was heated to 60˚C. After 60 seconds had passed in this state, the active energy beam curable resin base material laminate product was passed at a rate of 2.5 m/min 20 cm below from the metal halide lamp having an output of 9.6 kW through the PET film. Thereby, Adhesive Layer (1) was cured to form a cured coating film layer. Thus, a cured coating film layer-containing transfer film laminate was produced. As the curing condition for producing the cured coating film layer-containing transfer film laminate, the accumulated light amount was 570 mJ/$cm^2$, and the peak illuminance was 220 mW/$cm^2$,

Subsequently, the PET film including the melamine release layer was peeled from the cured coating film layer-containing transfer film laminate to produce a resin laminate. The film thickness of the cured coating film layer in the resin laminate was 13 μm. The result of evaluation is shown in Table 1.

The total light transmittance of the resin laminate is 93%, the haze value is 0.4%, and transparency is high. As a result of the scratch resistance test of the soil resistant cured film of the resin laminate (scratch resistance evaluation method 1), Δhaze of the surface is 0.05%, and the number of scratches is 1. Moreover, as a result of the scratch resistance test (scratch resistance evaluation method 2), Δhaze of the surface is 0.15%, and the number of scratches is 3. The resin laminate has high adhesion. The water contact angle (2) of the surface of the soil resistant cured film of the resin laminate is 105˚, and the contact angle of triolein is 65˚. The oil ink wiping properties of the surface of the soil resistant cured film of the resin laminate are at a level at which the oil ink can be completely wiped out when the oil ink is wiped 5 times. In the sweat resistance of the surface of the soil resistant cured film of the resin laminate, no change

in the color is found. The bottom wavelength of the surface of the soil resistant cured film of the resin laminate is 600 nm, and the bottom wavelength reflectance is 2.0%. No change in the reflected color is found even if fingerprints adhere onto the surface of the soil resistant cured film of the resin laminate.

[Example 2]

A PET film having the soil resistant film laminated thereon was passed at a rate of 9 m/min 20 cm below a high pressure mercury lamp of 9.6 kW (output setting of 50%), and the ultraviolet rays curing condition when the soil resistant film was cured to form a soil resistant cured film was changed to the condition shown in Table 1. Except that, in the same manner as in Example 1, a resin laminate was produced. The result of evaluation is shown in Table 1. Cissing defects were produced in an extremely slight area in the surface of the soil resistant cured film when Adhesive Layer (1) was formed.

[Example 3]

A PET film having the soil resistant film laminated thereon was passed at a rate of 6 m/min, and the ultraviolet rays curing condition when the soil resistant film was cured to form a soil resistant cured film was changed to the condition shown in Table 1. Except that, in the same manner as in Example 2, a resin laminate was produced. The result of evaluation is shown in Table 1. Cissing defects were produced in an extremely slight area in the surface of the soil resistant cured film when Adhesive Layer (1) was formed.

[Examples 4 to 8]

Instead of Soil Resistant Composition (1), Soil Resistant Compositions (2) to (6) were used. Except that, in the same manner as in Example 1, a resin laminate was produced. The result of evaluation is shown in Table 1.

[Example 9]

A transfer film before Adhesive Layer (1) was formed was produced in the same manner as in Example 1. Next, using an applicator (clearance: memory 4), a composition for a high refractive index conductive hard coat layer having a composition shown below was applied onto the surface of the soil resistant cured film of the transfer film, and dried at 80˚C for 10 minutes to form a coating film for a high refractive index conductive hard coat layer. No cissing defects were produced when the coating film for a high refractive index conductive hard coat layer was formed.

<Composition of composition for high refractive index conductive hard coat layer>

ELCOM MR-1009SBV P-30: 160 parts
M400: 52 parts
IRGACURE 907: 5 parts
IPA: 290 parts.

A transfer film having the coating film for a high refractive index conductive hard coat layer formed thereon was passed at a rate of 2.5 m/min 20 cm below a high pressure mercury lamp of 9.6 kW to cure the coating film for a high refractive index conductive hard coat layer. Thereby, a laminate having a high refractive index conductive hard coat layer laminated as the high refractive index conductive hard coat layer was produced.

Adhesive Layer (1) was formed on the surface of the high refractive index conductive hard coat layer of the laminate having the high refractive index conductive hard coat layer laminated thereon was formed in the same manner as in Example 1 to produce a resin laminate. The result of evaluation is shown in Table 1. The surface resistance value of the soil resistant cured film of the resin laminate is 4 x $10^{10}$ Ω/□, and the resin laminate has the antistatic ability.

[Example 10]

A laminate having a high refractive index conductive hard coat layer laminated was produced in the same manner as in Example 9. Using the #10 bar coater, a thermoplastic resin solution for an adhesive layer below was applied onto the surface of the high refractive index conductive hard coat layer of the laminate having the high refractive index conductive hard coat layer laminated thereon, Then, the thermoplastic resin solution for an adhesive layer was dried at 80˚C for 15 minutes to volatilize the solvent. Thus, a transfer film having Adhesive Layer (2) formed thereon was produced,

<Composition of thermoplastic resin solution for adhesive layer>

Acrylic resin "BR-80" (made by MITSUBISHI RAYON CO., LTD., trade name): 2 parts
Methyl isobutyl ketone: 49 parts
IPA: 49 parts.

Next, using an ACRYLITE EX001 having a thickness of 2 mm as the resin base material, the transfer film was layered on the surface of the resin base material through Adhesive Layer (2). Subsequently, using hydraulic molding machine (made by Shoji Tekko K.K.), press was performed at a pressure of 10 MPa for 10 minutes at a setting temperature of an upper portion and a lower portion of the hydraulic molding machine of 120˚C. A thermocouple was attached to the surface of the transfer film, and the temperature of the surface of the transfer film was measured. The temperature of the surface thereof after 10 minutes after press was 100˚C, Next, after cooling to 30˚C while the pressure was applied, the PET film including the melamine release layer was peeled to produce a resin laminate having the high refractive index conductive hard coat layer laminated thereon. The result of evaluation is shown in Table 1. The surface resistance value of the soil resistant cured film of the resin laminate is 4 x $10^{10}$ Ω/□, and the resin laminate has the antistatic ability.

[Example 11]

As the resin base material, a Panlite AD-5503 having a thickness of 2 mm was used. Except that, a resin laminate was produced in the same manner as in Example 1. The result of evaluation is shown in Table 1.

[Examples 12 to 15]

The curing condition when the cured coating film layer-containing transfer film laminate was produced was changed to the condition shown in Table 1. Except that, a resin laminate was produced in the same manner as in Example 1. The result of evaluation is shown in Table 1.

[Example 16]

40 parts of C6DA, 60 parts of M305, and 1.0 part of DAROCUR TPO were mixed to prepare an active energy beam curable composition, and Adhesive Layer (3) was formed. Except that, a resin laminate was produced in the same manner as in Example 1. The result of evaluation is shown in Table 1.

[Comparative Example 1]

Instead of Soil Resistant Composition (1), Soil Resistant Composition (8) was used. Except that, a resin laminate was produced in the same manner as in Example 3. The result of evaluation is shown in Table 3. Many cissing defects were produced when Adhesive Layer (1) was formed on the surface of the soil resistant cured film, and the area of Adhesive Layer (1) formed was extremely small. The result of evaluation is shown in Table 3.

[Comparative Example 2]

Using the #10 bar coater, Soil Resistant Composition (9) was applied onto the surface of a PET film having a thickness of 100 μm and including a melamine release layer (made by Reiko Co., Ltd., trade name: AC-J), and dried at 90˚C for 90 minutes to be cured. Thus, a soil resistant cured film was formed. The film thickness of the soil resistant cured film was 100 nm based on the calculation from the concentration of the solid content of the thermally curable water repellent hard coat coating material solution, and the amount and area of the thermally curable water repellent hard coat coating material solution to be applied. The water contact angle (1) of the surface of the soil resistant cured film is 102˚.

Next, PH-91 as the primer coating material was applied onto the surface of the soil resistant cured film to form a coating film of the primer layer. However, many cissing defects were produced, and the area of the coating film of the primer layer formed was extremely small. Subsequently, the PET film having the coating film of the primer layer partially formed thereon was left for 10 minutes at room temperature. Then, the PET film was dried at 90˚C for 60 minutes to form a primer layer.

Next, in the same manner as in Example 1, Adhesive Layer (1) was formed on the surface on which the primer layer of the transfer film was formed. Further, using the transfer film, a resin laminate was produced in the same manner as in Example 1. The result of evaluation is shown in Table 3.

[Example 17]

2.6 g of an isocyanate group containing acrylate compound (made by Showa Denko K.K., product name: Karenz BEI), 8 g of a perfluoropolyether compound (made by Solvay Solexis S.p.A., product name: FLUOROLINK D10H), and 0.005 g of dibutyltin dilaurate were added to a recovery flask including a cooling tube, and stirred at 50˚C for 6 hours to prepare a cloudy viscous liquid containing Monomer (A-2) containing a perfluoropolyether group and a nitrogen atom. Methyl ethyl ketone was added to the solution to dilute the solution such that the concentration of the solid content was 20% by mass. Thereby, the liquid containing Monomer (A-2) containing a perfluoropolyether group and a nitrogen atom was prepared.

Next, using the liquid containing Monomer (A-2) containing a perfluoropolyether group and a nitrogen atom, Soil Resistant Composition (7) was prepared according to the components to be blended and the blending ratio shown in Table 2. Subsequently, a resin laminate was produced in the same manner as in Example 1 except that Soil Resistant Composition (7) was used instead of Soil Resistant Composition (1). The result of evaluation is shown in Table 2.

[Example 18]

Using the #10 bar coater, Soil Resistant Composition (10) was applied on the surface of a PET film having a thickness of 100 μm and including the melamine release layer (made by Reiko Co., Ltd., trade name: AC-J), and dried at 80˚C for 15 minutes to form a soil resistant film, The critical surface tension of the melamine release layer was 44 mN/m. The film thickness of the soil resistant film was 93 nm based on the calculation from the concentration of the solid content of Soil Resistant Composition (10) and the amount and area of Soil Resistant Composition (10) to be applied.

Using an applicator (clearance; memory 5), IPA as the liquid organic compound was applied onto the soil resistant film to form a coating film of the liquid organic compound. Then, the coating film was heated at 80˚C for 15 minutes to volatile IPA. Next, the PET film having the soil resistant film laminated thereon was passed at a rate of 9 m/min 20 cm below a high pressure mercury lamp of 9.6 kW (output setting of 50%) to cure the soil resistant film and form a soil resistant cured film. Thus, a transfer film was produced. At this time, the accumulated light amount was 100 $mJ/cm^2$, and the peak illuminance was 130 $mW/cm^2$.

Next, 35 parts of TAS, 30 parts of C6DA, 10 parts of M305, 25 parts of M400, and 2 parts of DAROCUR TPO were mixed to prepare an active energy beam curable composition. Using the #10 bar coater, the active energy beam curable composition was applied onto the surface of the soil resistant cured film of the transfer film to form Adhesive Layer (1). No cissing defects were produced when Adhesive Layer (1) was formed on the surface of the soil resistant cured film.

The transfer film was layered on the surface of the resin base material heated to 60˚C through Adhesive Layer (1). As the resin base material, an ACRYLITE EX001 having a thickness of 2 mm was used. Next, using a rubber roll having a JIS hardness of 40˚, pressure-bonding was performed such that the thickness of Adhesive Layer (1) was 15 μm, by squeezing the active energy beam curable composition that formed Adhesive Layer (1) so as to avoid involvement of air bubbles. Thus, an active energy beam curable resin base material laminate product was produced. The thickness of Adhesive Layer (1) was calculated from the amount of the active energy beam curable composition to be supplied and the area thereof to be spread.

The active energy beam curable resin base material laminate product was heated to 60˚C. After 60 seconds had passed in this state, the active energy beam curable resin base material laminate product was passed at a rate of 2.5 m/min 20 cm below the metal halide lamp having an output of 9.6 kW through the PET film. Thereby, Adhesive Layer (1) was cured to form a cured coating film layer. Thus, a cured coating film layer-containing transfer film laminate was produced. As the curing condition for producing a cured coating film layer-containing transfer film laminate, the accumulated light amount was 570 $mJ/cm^2$, and the peak illuminance was 220 $mW/cm^2$.

Subsequently, the PET film including the melamine release layer was peeled from the cured coating film layer-containing transfer film laminate to produce a resin laminate. The film thickness of the cured coating film layer in the resin laminate was 13 μm. The result of evaluation is shown in Table 4.

[Examples 19 to 25]

As the liquid organic compound, Liquid Organic Compounds (2) to (8) shown in Table 5 were used instead of IPA (Liquid Organic Compound (1)). Except that, a resin laminate was produced in the same manner as in Example 18. The result of evaluation is shown in Table 4.

[Examples 26 to 28]

Soil Resistant Compositions (11) to (13) shown in Table 4 were used instead of Soil Resistant Composition

(10). Except that, a resin laminate was produced in the same manner as in Example 18. The result of evaluation is shown in Table 4.

[Example 29]

The ultraviolet rays curing condition for the soil resistant film was changed to the condition shown in Table 4. Except that, a resin laminate was produced in the same manner as in Example 18. The result of evaluation is shown in Table 4.

[Comparative Example 3]

In Example 18, the liquid organic compound was not applied and volatized. Except that, a resin laminate was produced in the same manner as in Example 18. The result of evaluation is shown in Table 6. In the resin laminate, the soil resistance of the surface is lower than those in the resin laminates produced in Examples.

[Comparative Examples 4 and 5]

As the liquid organic compound, Liquid Organic Compounds (9) and (10) shown in Table 5 were used instead of IPA (Liquid Organic Compound (1)). Except that, a resin laminate was produced in the same manner as in resin Example 18. The result of evaluation is shown in Table 6. In Comparative Examples 4 and 5, the resin laminate was produced using a liquid organic compound different from alcohols, esters, ethers, and ketones that are the liquid organic compound. In the resin laminate, the soil resistance of the surface is lower than those in the resin laminates produced in Examples,

[Example 30]

Using the #10 bar coater, Soil Resistant Composition (10) was applied onto the PET surface of a PET film having a thickness of 100 μm (made by TOYOBO CO., LTD., trade name: A4100), and dried at 80˚C for 15 minutes to form a soil resistant film. The critical surface tension of the PET surface was 42 mN/m. The film thickness of the soil resistant film was 93 nm based on the calculation from the concentration of the solid content of Soil Resistant Composition (10) and the amount and area of Soil Resistant Composition (10) to be applied.

The PET film having the soil resistant film laminated thereon was passed at a rate of 9 m/min 20 cm below a high pressure mercury lamp of 9.6 kW (output setting of 50%) to cure the soil resistant film and form a soil resistant cured film. Thus, a transfer film was produced. As the ultraviolet rays curing condition when the soil resistant cured film was formed, the accumulated light amount was 100 $mJ/cm^2$, and the peak illuminance was 130 $mW/cm^2$.

Next, 35 parts of TAS, 30 parts of C6DA, 10 parts of M305, 25 parts of M400, and 2 parts of DAROCUR TPO were mixed to prepare an active energy beam curable composition. Using the #10 bar coater, the active energy beam curable composition was applied onto the surface of the soil resistant cured film of the transfer film to form Adhesive Layer (1). No cissing defects were produced when Adhesive Layer (1) was formed on the surface of the soil resistant cured film.

The transfer film was layered on the surface of the resin base material heated to 60˚C through Adhesive Layer (1), As the resin base material, an ACRYLITE EX001 having a thickness of 2 mm was used. Next, using a rubber roll having a JIS hardness of 40˚, pressure-bonding was performed such that the thickness of Adhesive Layer (1) was 15 μm, by squeezing the active energy beam curable composition that formed Adhesive Layer (1) so as to avoid involvement of air bubbles, Thus, an active energy beam curable resin base material laminate product was produced. The thickness of Adhesive Layer (1) was calculated from the amount of the active energy beam curable composition to be supplied and the area thereof to be spread.

The active energy beam curable resin base material laminate product was heated to 60˚C. After 60 seconds had passed in this state, the active energy beam curable resin base material laminate product was passed at a rate of 2.5 m/min 20 cm below a metal halide lamp having an output of 9.6 kW through the PET film. Thereby, Adhesive Layer (1) was cured to form a cured coating film layer. Thus, a cured coating film layer-containing transfer film laminate was produced. As the curing condition for producing the cured coating film layer-containing transfer film laminate, the accumulated light amount was 570 $mJ/cm^2$, and the peak illuminance was 220 $mW/cm^2$.

Subsequently, the PET film was peeled from the cured coating film layer-containing transfer film laminate to produce a resin laminate. The film thickness of the cured coating film layer in the resin laminate was 13 μm. The result of evaluation is shown in Table 7.

[Examples 31 and 32]

Soil Resistant Compositions (13) and (14) shown in Table 7 were used instead of Soil Resistant Composition (10). Except that, a resin laminate was produced in the same manner as in Example 30. The result of evaluation is shown in Table 7.

[Example 33]

Instead of the PET film having a thickness of 100 μm (made by TOYOBO CO., LTD., trade name: A4100), a PEN film of 100 μm (made by Teijin DuPont Films Japan Limited, trade name: Teonex Q65) was used. Except that, a resin laminate was produced in the same manner as in Example 30. The result of evaluation is shown in Table 7. The critical surface tension of the PEN surface was 43 mN/m.

[Table 1]

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 |
|---|---|---|---|---|---|---|---|---|---|---|---|---|---|---|---|---|---|---|---|
| Soil resistant composition | Kind | | | (1) | (1) | (1) | (2) | (3) | (4) | (5) | (6) | (1) | (1) | (1) | (1) | (1) | (1) | (1) | (1) |
| | Monomer unit containing perfluoropolyether group and nitrogen atom (A) | DAC | Solid content (parts) | 0.5 | 0.5 | 0.5 | 0.5 | 0.5 | 0.25 | 0.7 | 0.77 | 0.5 | 0.5 | 0.5 | 0.5 | 0.5 | 0.5 | 0.5 | 0.5 |
| | | | Solution (parts) | 2.5 | 2.5 | 2.5 | 2.5 | 2.5 | 1.25 | 3.5 | 3.85 | 2.5 | 2.5 | 2.5 | 2.5 | 2.5 | 2.5 | 2.5 | 2.5 |
| | Inorganic fine particles (B) | Silica sol (1) | Solid content (parts) | 0.5 | 0.5 | 0.5 | 0 | 0 | 0.75 | 0.30 | 0.23 | 0.5 | 0.5 | 0.5 | 0.5 | 0.5 | 0.5 | 0.5 | 0.5 |
| | | | Proportion of inorganic fine particles (%) | 51 | 51 | 51 | 0 | 0 | 51 | 51 | 51 | 51 | 51 | 51 | 51 | 51 | 51 | 51 | 51 |
| | | | Solution (parts) | 0.83 | 0.83 | 0.83 | 0 | 0 | 1.25 | 0.5 | 0.38 | 0.83 | 0.83 | 0.83 | 0.83 | 0.83 | 0.83 | 0.83 | 0.83 |
| | | Silica sol (2) | Solid content (parts) | 0 | 0 | 0 | 0.5 | 0 | 0 | 0 | 0 | 0 | 0 | 0 | 0 | 0 | 0 | 0 | 0 |
| | | | Proportion of inorganic fine particles (%) | 0 | 0 | 0 | 61 | 0 | 0 | 0 | 0 | 0 | 0 | 0 | 0 | 0 | 0 | 0 | 0 |
| | | | Solution (parts) | 0 | 0 | 0 | 0.83 | 0 | 0 | 0 | 0 | 0 | 0 | 0 | 0 | 0 | 0 | 0 | 0 |
| | | Silica sol (3) | Solid content (parts) | 0 | 0 | 0 | 0 | 0.5 | 0 | 0 | 0 | 0 | 0 | 0 | 0 | 0 | 0 | 0 | 0 |
| | | | Proportion of inorganic fine particles (%) | 0 | 0 | 0 | 0 | 44 | 0 | 0 | 0 | 0 | 0 | 0 | 0 | 0 | 0 | 0 | 0 |
| | | | Solution (parts) | 0 | 0 | 0 | 0 | 0.83 | 0 | 0 | 0 | 0 | 0 | 0 | 0 | 0 | 0 | 0 | 0 |
| | | THRULYA S | Solid content (parts) | 0 | 0 | 0 | 0 | 0 | 0 | 0 | 0 | 0 | 0 | 0 | 0 | 0 | 0 | 0 | 0 |
| | | | Proportion of inorganic fine particles (%) | 0 | 0 | 0 | 0 | 0 | 0 | 0 | 0 | 0 | 0 | 0 | 0 | 0 | 0 | 0 | 0 |
| | | | Solution (parts) | 0 | 0 | 0 | 0 | 0 | 0 | 0 | 0 | 0 | 0 | 0 | 0 | 0 | 0 | 0 | 0 |
| | Polyfunctional acrylate | M400 | Solid content (parts) | 0 | 0 | 0 | 0 | 0 | 0 | 0 | 0 | 0 | 0 | 0 | 0 | 0 | 0 | 0 | 0 |
| | | | - | 0 | 0 | 0 | 0 | 0 | 0 | 0 | 0 | 0 | 0 | 0 | 0 | 0 | 0 | 0 | 0 |
| | | | Solution (parts) | 0 | 0 | 0 | 0 | 0 | 0 | 0 | 0 | 0 | 0 | 0 | 0 | 0 | 0 | 0 | 0 |
| | Photoinitiator | IRGACURE 819 | Solid content (parts) | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| | Diluent solvent | PGM | (Parts) | 98.5 | 98.5 | 98.5 | 98.5 | 98.5 | 98.5 | 98.5 | 98.5 | 98.5 | 98.5 | 98.5 | 98.5 | 98.5 | 98.5 | 98.5 | 98.5 |
| | Content of fluorinated group-containing polyether compound (A) based on 100 parts of non-volatile component | | (%) | 47.7 | 47.7 | 47.7 | 47.7 | 47.7 | 23.8 | 66.7 | 73.5 | 47.7 | 47.7 | 47.7 | 47.7 | 47.7 | 47.7 | 47.7 | 47.7 |
| | Concentration of solid content | | (%) | 1.03 | 1.03 | 1.03 | 1.03 | 1.03 | 1.04 | 1.02 | 1.02 | 1.03 | 1.03 | 1.03 | 1.03 | 1.03 | 1.03 | 1.03 | 1.03 |
| Ultraviolet rays curing condition | Peak illuminance | | mW/cm2 | 1.5 | 130 | 130 | 1.5 | 1.5 | 1.5 | 1.5 | 1.5 | 1.5 | 1.5 | 1.5 | 1.5 | 1.5 | 1.5 | 1.5 | 1.5 |
| | Accumulated light amount | | mJ/cm2 | 10 | 100 | 150 | 10 | 10 | 10 | 10 | 10 | 10 | 10 | 10 | 10 | 10 | 10 | 10 | 10 |
| Condition for producing cured coating film layer-containing transfer film laminate | Kind of adhesive layer | | | (1) | (1) | (1) | (1) | (1) | (1) | (1) | (1) | (1) | (2) | (1) | (1) | (1) | (1) | (1) | (3) |
| | Temperature | | (°C) | 60 | 60 | 60 | 60 | 60 | 60 | 60 | 60 | 60 | - | 60 | 60 | 75 | 60 | 60 | 60 |
| | Time | | (Seconds) | 60 | 60 | 60 | 60 | 60 | 60 | 60 | 60 | 60 | - | 60 | 180 | 60 | 60 | 60 | 60 |
| | Curing condition | Peak illuminance | mW/cm2 | 220 | 220 | 220 | 220 | 220 | 220 | 220 | 220 | 220 | - | 220 | 220 | 220 | 220 | 220 | 220 |
| | | Accumulated light amount | mJ/cm2 | 570 | 570 | 570 | 570 | 570 | 570 | 570 | 570 | 570 | - | 570 | 570 | 570 | 285 | 1140 | 570 |
| | Kind of resin base material | | | Methacrylic resin | Methacrylic resin | Methacrylic resin | Methacrylic resin | Methacrylic resin | Methacrylic resin | Methacrylic resin | Methacrylic resin | Methacrylic resin | Methacrylic resin | Polycarbonate resin | Methacrylic resin | Methacrylic resin | Methacrylic resin | Methacrylic resin | Methacrylic resin |
| Transfer film | Water contact angle (1) (°) | | | 82 | 97 | 99 | 82 | 86 | 84 | 88 | 84 | 82 | 82 | 82 | 82 | 82 | 82 | 82 | 82 |
| Result of evaluation of resin laminate | Total light transmittance (%) | | | 93 | 93 | 93 | 93 | 93 | 93.5 | 93 | 93 | 94 | 94 | 93 | 93 | 93 | 93 | 93 | 93 |
| | Haze (%) | | | 0.4 | 0.4 | 0.4 | 0.4 | 0.4 | 0.4 | 0.4 | 0.4 | 0.5 | 0.5 | 0.6 | 0.4 | 0.4 | 0.4 | 0.4 | 0.4 |
| | Scratch resistance | ΔHaze (%) | | 0.05 | 0.15 | 0.18 | 0.1 | 0.05 | 0.02 | 0.1 | 0.15 | 0.05 | 0.15 | 0.05 | 0.05 | 0.05 | 0.05 | 0.05 | 0.05 |
| | Scratch resistance evaluation method 1 | The number of scratches | | 1 | 4 | 7 | 3 | 1 | 0 | 3 | 5 | 1 | 4 | 1 | 1 | 1 | 1 | 1 | 1 |
| | Scratch resistance | ΔHaze (%) | | 0.15 | 0.25 | 0.35 | 0.2 | 0.15 | 0.1 | 0.22 | 0.25 | 0.15 | 0.25 | 0.15 | 0.15 | 0.15 | 0.15 | 0.15 | 0.15 |
| | Scratch resistance evaluation method 2 | The number of scratches | | 3 | 5 | 9 | 4 | 3 | 2 | 4 | 7 | 2 | 6 | 3 | 2 | 2 | 2 | 2 | 2 |
| | Anti-reflective properties | Bottom wavelength (nm) | | 600 | 600 | 600 | 600 | 600 | 600 | 600 | 600 | 620 | 620 | 600 | 600 | 600 | 600 | 600 | 600 |
| | | Bottom wavelength reflectance (%) | | 2.0 | 2.0 | 2.0 | 2.0 | 2.0 | 1.8 | 2.2 | 2.3 | 1.0 | 1.0 | 2.0 | 2.1 | 2.0 | 2.0 | 2.0 | 2.0 |
| | | Presence of reflected color when fingerprints adhere | | ⊙ | ⊙ | ⊙ | ⊙ | ⊙ | ○ | ⊙ | ⊙ | ⊙ | ⊙ | ⊙ | ⊙ | ⊙ | ⊙ | ⊙ | ⊙ |
| | Soil resistance | Water contact angle (2) (°) | | 105 | 103 | 100 | 109 | 106 | 94 | 110 | 115 | 103 | 101 | 105 | 105 | 105 | 105 | 105 | 105 |
| | | Water contact angle (1)/water contact angle (2) (-) | | 0.78 | 0.94 | 0.99 | 0.75 | 0.81 | 0.89 | 0.80 | 0.73 | 0.80 | 0.81 | 0.78 | 0.78 | 0.78 | 0.78 | 0.78 | 0.78 |
| | | Contact angle of triolein(α) (°) | | 65 | 61 | 60 | 62 | 66 | 58 | 68 | 70 | 62 | 61 | 65 | 65 | 65 | 65 | 65 | 65 |
| | | Oil ink wiping properties (-) | | ⊙ | ⊙ | ⊙ | ⊙ | ⊙ | ○ | ⊙ | ⊙ | ⊙ | ⊙ | ⊙ | ⊙ | ⊙ | ⊙ | ⊙ | ⊙ |
| | Adhesion (-) | | | 100/100 | 100/100 | 100/100 | 100/100 | 100/100 | 100/100 | 100/100 | 100/100 | 100/100 | 100/100 | 100/100 | 100/100 | 100/100 | 100/100 | 100/100 | 100/100 |
| | Sweat resistance (-) | | | ○ | ○ | ○ | ○ | ○ | ○ | ○ | ○ | ○ | ○ | ○ | ○ | ○ | ○ | ○ | ○ |
| | State of interface between soil resistant cured film and function layer, cured coating film layer or thermoplastic resin coating film layer | | | ○ | ○ | ○ | ○ | ○ | ○ | ○ | ○ | ○ | ○ | ○ | ○ | ○ | ○ | ○ | ○ |
| | N/F | | | 0.028 | 0.085 | 0.103 | 0.068 | 0.076 | 0.100 | 0.055 | 0.048 | 0.064 | 0.061 | 0.055 | 0.058 | 0.062 | 0.051 | 0.056 | 0.048 |

[Table 2]

| | | | | Example 17 |
|---|---|---|---|---|
| Soil resistant composition | Kind | | | (7) |
| | Monomer unit containing perfluoropolyether group and nitrogen atom (A) | Nitrogen-containing perfluoropolyether-based Monomer (A-2) | Solid content (parts) | 0.5 |
| | | | Solution (parts) | 2.5 |
| | Inorganic fine particles (B) | Silica sol (1) | Solid content (parts) | 0.5 |
| | | | Proportion of inorganic fine particles (%) | 51 |
| | | | Solution (parts) | 0.83 |
| | | Silica sol (2) | Solid content (parts) | 0 |
| | | | Proportion of inorganic fine particles (%) | 0 |
| | | | Solution (parts) | 0 |
| | | Silicon sol (3) | Solid content (parts) | 0 |
| | | | Proportion of inorganic fine particles (%) | 0 |
| | | | Solution (parts) | 0 |
| | | THRULYA S | Solid content (parts) | 0 |
| | | | Proportion of inorganic fine particles (%) | 0 |
| | | | Solution (parts) | 0 |
| | Polyfunctional acrylate | M400 | Solid content (parts) | 0 |
| | | | - | 0 |
| | | | Solution (parts) | 0 |
| | Photoinitiator | IRGACURE 819 | Solid content (parts) | 0.05 |
| | Diluent solvent | PGM | (Parts) | 98.5 |
| | Content of fluorinated group-containing polyether compound (A) based on 100 parts of non-volatile component | | (%) | 47.7 |
| | Concentration of solid content | | (%) | 1.03 |
| Ultraviolet rays curing condition | | Peak illuminance | mW/cm2 | 1.5 |
| | | Accumulated light amount | mJ/cm2 | 10 |

(continued)

| | | | | | Example 17 |
|---|---|---|---|---|---|
| Condition for producing cured coating film layer-containng transfer film laminate | Kind of adhesive layer | | | | (1) |
| | Temperature | | | (˚C) | 60 |
| | Time | | | (Seconds) | 60 |
| | Curing condition | | Peak illuminance | mW/cm2 | 220 |
| | | | Accumulated light amount | mJ/cm2 | 570 |
| | Kind of resin base material | | | | Methacrylic resin |
| Transfer film | Water contact angle (1) (˚) | | | | 80 |
| Result of evaluation of resin laminate | Total light transmittance (%) | | | | 93 |
| | Haze(%) | | | | 0.4 |
| | Scratch resistance evaluation method 1 | ΔHaze (%) | | | 0.07 |
| | | The number of scratches | | | 2 |
| | Scratch resistance evaluation method 2 | ΔHaze (%) | | | 0.12 |
| | | The number of scratches | | | 3 |
| | Anti-reflective properties | Bottom wavelength (nm) | | | 600 |
| | | Bottom wavelength reflectance (%) | | | 2.0 |
| | | Presence of reflected color when fingerprints adhere | | | O |
| | Soil resistance | Water contact angle (2) (˚) | | | 92 |
| | | Water contact angle (1)/water contact angle (2) (-) | | | 0.87 |
| | | Contact angle of triolein (α) (˚) | | | 55 |
| | | Oil ink wiping properties (-) | | | O |
| | Adhesion (-) | | | | 100/100 |
| | Sweat resistance (-) | | | | O |
| | State of interface between soil resistant cured film and function layer, cured coating film layer or thermoplastic resin coating film layer | | | | O |
| | N/F | | | | 0.059 |

[Table 3]

| | Comparative Example 1 | Comparative Example 2 |
|---|---|---|

| | | | | | |
|---|---|---|---|---|---|
| Soil resistant composition | Kind | | | (8) | |
| | Fluorine group-containing polyether compound (A) | DAC | Solid content (parts) | 0.25 | - |
| | | | Solution (parts) | 1.25 | - |
| | Inorganic fine particles (B) | Silica sol (1) | Solid content (parts) | 0 | - |
| | | | Proportion of inorganic fine particles (%) | 0 | - |
| | | | Solution (parts) | 0 | - |
| | | Silica sol (2) | Solid content (parts) | 0 | - |
| | | | Proportion of inorganic fine particles (%) | 0 | - |
| | | | Solution (parts) | 0 | - |
| | | Silica sol (3) | Solid content (parts) | 0 | - |
| | | | Proportion of inorganic fine particles (%) | 0 | - |
| | | | Solution (parts) | 0 | - |
| | | THRULYA S | Solid content (parts) | 0 | - |
| | | | Proportion of inorganic fine particles (%) | 0 | - |
| | | | Solution (parts) | 0 | - |
| | Polyfunctional acrylate | M400 | Solid content (parts) | 0.75 | - |
| | | | - | 0 | - |
| | | | Solution (parts) | 0.75 | - |
| | Photoinitiator | IRGACURE 819 | Solid content (parts) | 0.05 | - |
| | Diluent solvent | PGM | (Parts) | 98.5 | - |
| | Content of fluorinated group-containing polyether compound (A) based on 100 parts of non-volatile component | | (%) | 23.8 | - |
| | Concentration of solid content | | (%) | 1.04 | - |

| | | | | | |
|---|---|---|---|---|---|
| Ultraviolet rays curing condition | | Peak illuminance | mW/cm2 | 130 | - |
| | | Accumulated light amount | mJ/cm2 | 150 | - |
| Condition for producing cured coating film layer-containing transfer film laminate | | Kind of adhesive layer | | (1) | (1) |
| | | Temperature | (˚C) | 60 | 60 |
| | | Time | (Seconds) | 60 | 60 |
| | Curing condition | Peak illuminance | mW/cm2 | 220 | 220 |
| | | Accumulate d light amount | mJ/cm2 | 570 | 570 |
| | | Kind of resin base material | | Methacrylic resin | Methacrylic resin |
| Transfer film | | Water contact angle (1) (˚) | | 109 | 102 |
| Result of evaluation of resin laminate | Total light transmittance (%) | | | 92.2 | 92 |
| | Haze (%) | | | 0.4 | 0.2 |
| | Scratch resistance evaluation method 1 | ΔHaze (%) | | 1.0 | 0.5 |
| | | The number of scratches | | 10 | 10 |
| | Scratch resistance evaluation method 2 | ΔHaze (%) | | 1.57 | 0 8 |
| | | The number of scratches | | 13 | 12 |
| | Anti-reflective properties | Bottom wavelength (nm) | | 600 | - |
| | | Bottom wavelength reflectance (%) | | 3.5 | - |
| | | Presence of reflected color when fingerprints adhere | | × | - |
| | Soil resistance | Water contact angle (2) (˚) | | 88 | 88 |
| | | Water contact angle(1)/water contact angle (2) (-) | | 1.24 | 1 16 |
| | | Contact angle of triolein(α) (˚) | | 45 | 30 |
| | | Oil ink wiping properties (-) | | × | × |
| | Adhesion (-) | | | 90/100 | 40/100 |
| | Sweat resistance (-) | | | O | × |
| | State of interface between soil resistant cured film and function layer, cured coating film layer or thermoplastic resin coating film layer | | | O | - |
| | N/F | | | 0.116 | - |

[Table 4]

| | | | Example 18 | Example 19 | Example 20 | Example 21 | Example 22 | Example 23 | Example 24 | Example 25 | Example 26 | Example 27 | Example 28 | Example 29 |
|---|---|---|---|---|---|---|---|---|---|---|---|---|---|---|
| Soil resistant composition | Kind | | (10) | (10) | (10) | (10) | (10) | (10) | (10) | (10) | (11) | (12) | (13) | (10) |
| Soil resistant composition | Monomer unit containing perfluoropolyether group and nitrogen atom (A) - DAC | Solid content (parts) | 0.15 | 0.15 | 0.15 | 0.15 | 0.15 | 0.15 | 0.15 | 0.15 | 0.11 | 0.3 | 0.5 | 0.15 |
| | | Solution (parts) | 0.75 | 0.75 | 0.75 | 0.75 | 0.75 | 0.75 | 0.75 | 0.75 | 0.55 | 1.5 | 2.5 | 0.75 |
| | Inorganic fine particles (B) - Silica sol (1) | Solid content (parts) | 0.7 | 0.7 | 0.7 | 0.7 | 0.7 | 0.7 | 0.7 | 0.7 | 0.7 | 0.6 | 0.4 | 0.7 |
| | | Proportion of inorganic fine particles (%) | 51 | 51 | 51 | 51 | 51 | 51 | 51 | 51 | 51 | 51 | 51 | 51 |
| | | Solution (parts) | 1.17 | 1.17 | 1.17 | 1.17 | 1.17 | 1.17 | 1.17 | 1.17 | 1.23 | 1 | 0.67 | 1.17 |
| | Inorganic fine particles (B) - Silica sol (2) | Solid content (parts) | 0 | 0 | 0 | 0 | 0 | 0 | 0 | 0 | 0 | 0 | 0 | 0 |
| | | Proportion of inorganic fine particles (%) | 0 | 0 | 0 | 0 | 0 | 0 | 0 | 0 | 0 | 0 | 0 | 0 |
| | | Solution (parts) | 0 | 0 | 0 | 0 | 0 | 0 | 0 | 0 | 0 | 0 | 0 | 0 |
| | Inorganic fine particles (B) - Silica sol (3) | Solid content (parts) | 0 | 0 | 0 | 0 | 0 | 0 | 0 | 0 | 0 | 0 | 0 | 0 |
| | | Proportion of inorganic fine particles (%) | 0 | 0 | 0 | 0 | 0 | 0 | 0 | 0 | 0 | 0 | 0 | 0 |
| | | Solution (parts) | 0 | 0 | 0 | 0 | 0 | 0 | 0 | 0 | 0 | 0 | 0 | 0 |
| | Inorganic fine particles (B) - THRULYA S | Solid content (parts) | 0 | 0 | 0 | 0 | 0 | 0 | 0 | 0 | 0 | 0 | 0 | 0 |
| | | Proportion of inorganic fine particles (%) | 0 | 0 | 0 | 0 | 0 | 0 | 0 | 0 | 0 | 0 | 0 | 0 |
| | | Solution (parts) | 0 | 0 | 0 | 0 | 0 | 0 | 0 | 0 | 0 | 0 | 0 | 0 |
| | Polyfunctional acrylate - M400 | Solid content (parts) | 0.15 | 0.15 | 0.15 | 0.15 | 0.15 | 0.15 | 0.15 | 0.15 | 0.15 | 0.1 | 0.1 | 0.15 |
| | | - | | | | | | | | | | | | |
| | | Solution (parts) | 0.15 | 0.15 | 0.15 | 0.15 | 0.15 | 0.15 | 0.15 | 0.15 | 0.15 | 0.1 | 0.1 | 0.15 |
| | Photoinitiator - IRGACURE 819 | Solid content (parts) | 0.05 | 0.05 | 0.05 | 0.05 | 0.05 | 0.05 | 0.05 | 0.05 | 0.05 | 0.05 | 0.05 | 0.05 |
| | Diluent solvent - PGM | (Parts) | 98.5 | 98.5 | 98.5 | 98.5 | 98.5 | 98.5 | 98.5 | 98.5 | 98.5 | 98.5 | 98.5 | 98.5 |
| | Content of fluorinated group-containing polyether compound (A) based on 100 parts of non-volatile component | (%) | 14.3 | 14.3 | 14.3 | 14.3 | 14.3 | 14.3 | 14.3 | 14.3 | 10.5 | 28.6 | 47.5 | 14.3 |
| | Concentration of solid content | (%) | 1.05 | 1.05 | 1.05 | 1.05 | 1.05 | 1.05 | 1.05 | 1.05 | 1.04 | 1.04 | 1.03 | 1.05 |
| Liquid organic compound | | | (1) | (2) | (3) | (4) | (5) | (6) | (7) | (8) | (1) | (1) | (1) | (1) |
| Ultraviolet rays curing condition | Peak illuminance | mW/cm2 | 130 | 130 | 130 | 130 | 130 | 130 | 130 | 130 | 130 | 130 | 130 | 300 |
| | Accumulated light amount | mJ/cm2 | 100 | 100 | 100 | 100 | 100 | 100 | 100 | 100 | 100 | 100 | 100 | 600 |
| Condition for producing cured coating film layer-containing transfer film laminate | Kind of adhesive layer | | (1) | (1) | (1) | (1) | (1) | (1) | (1) | (1) | (1) | (1) | (1) | (1) |
| | Temperature | (°C) | 60 | 60 | 60 | 60 | 60 | 60 | 60 | 60 | 60 | 60 | 60 | 60 |
| | Time | (Seconds) | 60 | 60 | 60 | 60 | 60 | 60 | 60 | 60 | 60 | 60 | 60 | 60 |
| | Curing condition - Peak illuminance | mW/cm2 | 220 | 220 | 220 | 220 | 220 | 220 | 220 | 220 | 220 | 220 | 220 | 220 |
| | Curing condition - Accumulated light amount | mJ/cm2 | 570 | 570 | 570 | 570 | 570 | 570 | 570 | 570 | 570 | 570 | 570 | 570 |
| | Kind of resin base material | | Methacrylic resin | Methacrylic resin | Methacrylic resin | Methacrylic resin | Methacrylic resin | Methacrylic resin | Methacrylic resin | Methacrylic resin | Methacrylic resin | Methacrylic resin | Methacrylic resin | Methacrylic resin |
| Transfer film | Water contact angle (1) (°) | | 85 | 86 | 89 | 88 | 87 | 89 | 90 | 92 | 82 | 88 | 96 | 92 |
| evaluation of resin | Total light transmittance (%) | | 93 | 93 | 93 | 93 | 93 | 93 | 93 | 93 | 93 | 93 | 93 | 93 |
| | Haze (%) | | 0.4 | 0.4 | 0.4 | 0.4 | 0.4 | 0.4 | 0.4 | 0.4 | 0.4 | 0.4 | 0.4 | 0.4 |
| | Scratch resistance | ΔHaze (%) | - | - | - | - | - | - | - | - | - | - | - | - |
| | Scratch resistance evaluation method 1 | The number of scratches | - | - | - | - | - | - | - | - | - | - | - | - |
| | Scratch resistance | ΔHaze (%) | 0.08 | 0.08 | 0.08 | 0.08 | 0.08 | 0.08 | 0.08 | 0.08 | 0.02 | 0.12 | 0.2 | 0.12 |
| | Scratch resistance evaluation method 2 | The number of scratches | 1 | 1 | 1 | 1 | 1 | 1 | 1 | 1 | 0 | 2 | 2 | 2 |
| | Anti-reflective properties | Bottom wavelength (nm) | 600 | 600 | 600 | 600 | 600 | 600 | 600 | 600 | 600 | 600 | 600 | 600 |
| | | Bottom wavelength reflectance (%) | 2.0 | 2.0 | 2.0 | 2.0 | 2.0 | 2.0 | 2.0 | 2.0 | 2.0 | 2.0 | 2.0 | 2.0 |
| | | Presence of reflected color when fingerprints adhere | ⊙ | ⊙ | ⊙ | ⊙ | ⊙ | ⊙ | ○ | ○ | ○ | ⊙ | ⊙ | ⊙ |
| | Soil resistance | Water contact angle (2) (°) | 110 | 102 | 100 | 101 | 99 | 96 | 94 | 94 | 94 | 110 | 115 | 112 |
| | | Water contact angle (1)/water contact angle (2) (-) | 0.77 | 0.84 | 0.89 | 0.87 | 0.88 | 0.93 | 0.96 | 0.98 | 0.87 | 0.80 | 0.83 | 0.82 |
| | | Contact angle of triolein(α) (°) | 70 | 58 | 60 | 61 | 65 | 63 | 56 | 57 | 56 | 70 | 73 | 68 |
| | | Oil ink wiping properties (-) | ⊙ | ○ | ⊙ | ⊙ | ⊙ | ⊙ | ○ | ○ | ○ | ⊙ | ⊙ | ⊙ |
| | Adhesion (-) | | 100/100 | 100/100 | 100/100 | 100/100 | 100/100 | 100/100 | 100/100 | 100/100 | 100/100 | 100/100 | 100/100 | 100/100 |
| | Sweat resistance (-) | | ○ | ○ | ○ | ○ | ○ | ○ | ○ | ○ | ○ | ○ | ○ | ○ |
| | State of interface between soil resistant cured film and function layer, cured coating film layer or thermoplastic resin coating film layer | | ○ | ○ | ○ | ○ | ○ | ○ | ○ | ○ | ○ | ○ | ○ | ○ |
| | N/F | | 0.049 | 0.055 | 0.051 | 0.050 | 0.047 | 0.053 | 0.079 | 0.073 | 0.085 | 0.049 | 0.053 | 0.068 |

[Table 5]

| Liquid organic compound | | | | (1) | (2) | (3) | (4) | (5) | (6) | (7) | (8) | (9) | (10) |
|---|---|---|---|---|---|---|---|---|---|---|---|---|---|
| Volatile compound | Alcohol | IPA | Solid content (parts) | 100 | 0 | 50 | 90 | 0 | 0 | 0 | 90 | 0 | 0 |
| | | Ethanol | | 0 | 100 | 0 | 0 | 0 | 0 | 0 | 0 | 0 | 0 |
| | | PGM | | 0 | 0 | 50 | 10 | 0 | 0 | 0 | 0 | 0 | 0 |
| | Ketone | MIBK | | 0 | 0 | 0 | 0 | 100 | 0 | 0 | 0 | 0 | 0 |
| | Ether | Butyl cellosolve | | 0 | 0 | 0 | 0 | 0 | 100 | 0 | 0 | 0 | 0 |
| | Ester | MMA | | 0 | 0 | 0 | 0 | 0 | 0 | 100 | 0 | 0 | 0 |
| | Others | Toluene | | 0 | 0 | 0 | 0 | 0 | 0 | 0 | 10 | 100 | 0 |
| | | Hexane | | 0 | 0 | 0 | 0 | 0 | 0 | 0 | 0 | 0 | 100 |

[Table 6]

| | | | | Comparative Example 3 | Comparative Example 4 | Comparative Example 5 |
|---|---|---|---|---|---|---|
| Soil resistant composition | Kind | | | (10) | (10) | (10) |
| | Monomer unit containing perfluoropolyether group and nitrogen atom (A) | DAC | Solid content (parts) | 0.15 | 0.15 | 0.15 |
| | | | Solution (parts) | 0.75 | 0.75 | 0.75 |
| | Inorganic fine particles (B) | Silica sol (1) | Solid content (parts) | 0.7 | 0.7 | 0.7 |
| | | | Proportion of inorganic fine particles (%) | 51 | 51 | 51 |
| | | | Solution (parts) | 1.17 | 1.17 | 1.17 |
| | | Silica sol (2) | Solid content (parts) | 0 | 0 | 0 |
| | | | Proportion of inorganic fine particles (%) | 0 | 0 | 0 |
| | | | Solution (parts) | 0 | 0 | 0 |
| | | Silica sol (3) | Solid content (parts) | 0 | 0 | 0 |
| | | | Proportion of inorganic fine particles (%) | 0 | 0 | 0 |
| | | | Solution (parts) | 0 | 0 | 0 |
| | | THRULYA S | Solid content (parts) | 0 | 0 | 0 |
| | | | Proportion of inorganic fine particles (%) | 0 | 0 | 0 |
| | | | Solution (parts) | 0 | 0 | 0 |
| | Polyfunctional acrylate | M400 | Solid content (parts) | 0.15 | 0.15 | 0.15 |
| | | | - | | | |
| | | | Solution (parts) | 0.15 | 0.15 | 0.15 |
| | Photoinitiator | IRGACURE 819 | Solid content (parts) | 0.05 | 0.05 | 0.05 |
| | Diluent solvent | PGM | (Parts) | 98.5 | 98.5 | 98.5 |
| | Content of fluorinated group-containing polyether compound (A) based on 100 parts of non-volatile component | | (%) | 14.3 | 14.3 | 14.3 |
| | Concentration of solid content | | (%) | 1.05 | 1.05 | 1.05 |
| Liquid organic compound | | | | - | (9) | (10) |
| Ultraviolet rays curing condition | | Peak illuminance | mW/cm2 | 130 | 130 | 130 |
| | | Accumulated light amount | mJ/cm2 | 100 | 100 | 100 |
| Condition for producing cured coating film layer-containing transfer film laminate | | Kind of adhesive layer | | (1) | (1) | (1) |
| | | Temperature | (°C) | 60 | 60 | 60 |
| | | Time | (Seconds) | 60 | 60 | 60 |
| | | Curing condition: Peak illuminance | mW/cm2 | 220 | 220 | 220 |
| | | Curing condition: Accumulated light amount | mJ/cm2 | 570 | 570 | 570 |
| | | Kind of resin base material | | Methacrylic resin | Methacrylic resin | Methacrylic resin |
| Transfer film | | Water contact angle (1) (°) | | 96 | 97 | 96 |
| Result of evaluation of resin laminate | Total light transmittance (%) | | | 93 | 93 | 93 |
| | Haze (%) | | | 0.4 | 0.4 | 0.4 |
| | Scratch resistance Scratch resistance evaluation method 1 | ΔHaze (%) | | - | - | - |
| | | The number of scratches | | - | - | - |
| | Scratch resistance Scratch resistance evaluation method 2 | ΔHaze (%) | | 0.08 | 0.08 | 0.08 |
| | | The number of scratches | | 1 | 1 | 1 |
| | Anti-reflective properties | Bottom wavelength (nm) | | 600 | 600 | 600 |
| | | Bottom wavelength reflectance (%) | | 2.0 | 2.0 | 2.0 |
| | | Presence of reflected color when fingerprints adhere | | × | × | × |
| | Soil resistance | Water contact angle (2) (°) | | 76 | 76 | 76 |
| | | Water contact angle (1)/water contact angle (2) (-) | | 1.26 | 1.28 | 1.26 |
| | | Contact angle of triolein(α) (°) | | 19 | 19 | 19 |
| | | Oil ink wiping properties (-) | | × | × | × |
| | Adhesion (-) | | | 100/100 | 100/100 | 100/100 |
| | Sweat resistance (-) | | | ○ | ○ | ○ |
| | State of interface between soil resistant cured film and function layer, cured coating film layer or thermoplastic resin coating film layer | | | ○ | ○ | ○ |
| | N/F | | | 0.162 | 0.159 | 0.160 |

[Table 7]

| | | | | Example 30 | Example 31 | Example 32 | Example 33 |
|---|---|---|---|---|---|---|---|
| Soil resistant composition | Kind | | | (10) | (14) | (13) | (10) |
| | Monomer unit containing perfluoropolyether group and nitrogen atom (A) | DAC | Solid content (parts) | 0.15 | 0.13 | 0.5 | 0.15 |
| | | | Solution (parts) | 0.75 | 0.65 | 2.5 | 0.75 |
| | Inorganic fine particles (B) | Silica sol (1) | Solid content (parts) | 0.7 | 0.7 | 0.4 | 0.7 |
| | | | Proportion of inorganic fine particles (%) | 51 | 51 | 51 | 51 |
| | | | Solution (parts) | 1.17 | 1.17 | 0.67 | 1.17 |
| | | Silica sol (2) | Solid content (parts) | 0 | 0 | 0 | 0 |
| | | | Proportion of inorganic fine particles (%) | 0 | 0 | 0 | 0 |
| | | | Solution (parts) | 0 | 0 | 0 | 0 |
| | | Silica sol (3) | Solid content (parts) | 0 | 0 | 0 | 0 |
| | | | Proportion of inorganic fine particles (%) | 0 | 0 | 0 | 0 |
| | | | Solution (parts) | 0 | 0 | 0 | 0 |
| | | THRULYA S | Solid content (parts) | 0 | 0 | 0 | 0 |
| | | | Proportion of inorganic fine particles (%) | 0 | 0 | 0 | 0 |
| | | | Solution (parts) | 0 | 0 | 0 | 0 |
| | Polyfunctional acrylate | M400 | Solid content (parts) | 0.15 | 0.17 | 0.1 | 0.15 |
| | | | - | | | | |
| | | | Solution (parts) | 0.15 | 0.17 | 0.1 | 0.15 |
| | Photoinitiator | IRGACURE 819 | Solid content (parts) | 0.05 | 0.05 | 0.05 | 0.05 |
| | Diluent solvent | PGM | (Parts) | 98.5 | 98.5 | 98.5 | 98.5 |
| | Content of fluorinated group-containing polyether compound (A) based on 100 parts of non-volatile component | | (%) | 14.3 | 12.4 | 47.5 | 14.3 |
| | Concentration of solid content | | (%) | 1.05 | 1.05 | 1.03 | 1.05 |
| Ultraviolet rays curing condition | | Peak illuminance | mW/cm2 | 130 | 130 | 130 | 130 |
| | | Accumulated light amount | mJ/cm2 | 100 | 100 | 100 | 100 |
| Condition for producing cured coating film layer-containing transfer film laminate | Kind of adhesive layer | | | (1) | (1) | (1) | (1) |
| | Temperature | | (°C) | 60 | 60 | 60 | 60 |
| | Time | | (Seconds) | 60 | 60 | 60 | 60 |
| | Curing condition | Peak illuminance | mW/cm2 | 220 | 220 | 220 | 220 |
| | | Accumulated light amount | mJ/cm2 | 570 | 570 | 570 | 570 |
| | Kind of resin base material | | | Methacrylic resin | Methacrylic resin | Methacrylic resin | Methacrylic resin |
| Transfer film | Water contact angle (1) (°) | | | 86 | 83 | 94 | 88 |
| Result of evaluation of resin laminate | Total light transmittance (%) | | | 93 | 93 | 93 | 93 |
| | Haze (%) | | | 0.4 | 0.4 | 0.4 | 0.4 |
| | Scratch resistance Scratch resistance evaluation method 1 | ΔHaze (%) | | - | - | - | - |
| | | The number of scratches | | - | - | - | - |
| | Scratch resistance Scratch resistance evaluation method 2 | ΔHaze (%) | | 0.08 | 0.02 | 0.2 | 0.08 |
| | | The number of scratches | | 1 | 0 | 2 | 1 |
| | Anti-reflective properties | Bottom wavelength (nm) | | 600 | 600 | 600 | 600 |
| | | Bottom wavelength reflectance (%) | | 2.0 | 2.0 | 2.0 | 2.0 |
| | | Presence of reflected color when fingerprints adhere | | ⊙ | ⊙ | ⊙ | ⊙ |
| | Soil resistance | Water contact angle (2) (°) | | 108 | 103 | 109 | 110 |
| | | Water contact angle (1)/water contact angle (2) (-) | | 0.80 | 0.81 | 0.86 | 0.80 |
| | | Contact angle of triolein(α) (°) | | 68 | 63 | 68 | 66 |
| | | Oil ink wiping properties (-) | | ⊙ | ⊙ | ⊙ | ⊙ |
| | Adhesion (-) | | | 100/100 | 100/100 | 100/100 | 100/100 |
| | Sweat resistance (-) | | | O | O | O | O |
| | State of interface between soil resistant cured film and function layer, cured coating film layer or thermoplastic resin coating film layer | | | O | O | O | O |
| | N/F | | | 0.063 | 0.093 | 0.055 | 0.074 |

This application claims priority to Patent Application No. 2009-235652 filed in October 9, 2009 and Patent Application No. 2009-239886 filed in October 16, 2009, the entire contents of which are hereby incorporated by reference.

As above, the present invention has been described with reference to Embodiment (and Examples), but this application will not be limited to Embodiment (and Examples) above. The configuration and details of this application can be modified in various ways within the scope of the application, which can be understood by persons skilled in the art.

## Claims

1. A transfer film comprising a soil resistant cured film laminated on a surface of a transparent base material film, wherein a water contact angle (1) of a surface of the soil resistant cured film not contacting the transparent base material film is not more than 100°,

a water contact angle (2) of a surface of the soil resistant cured film contacting the transparent base material film is not less than 90˚, and a contact angle (α) of triolein is not less than 55˚.

**2.** A transfer film comprising a soil resistant cured film laminated on a surface of a transparent base material film, wherein a composition ratio (N/F) of a nitrogen atom (N) to a fluorine atom (F) obtained by X-ray photoelectron spectroscopic analysis of a surface of the soil resistant cured film contacting the transparent base material film is not more than 0.110.

**3.** The transfer film according to claim 1 or 2, wherein the soil resistant cured film is formed by curing a soil resistant composition containing a monomer (A) containing a perfluoropolyether group and a nitrogen atom, and inorganic fine particles.

**4.** The transfer film according to claim 3, wherein the surface of the inorganic fine particle is surface-treated with a hydrolyzable silane compound.

**5.** The transfer film according to claim 3 or 4, wherein the monomer (A) containing a perfluoropolyether group and a nitrogen atom is a compound represented by a following formula (1):
[Formula 1]

Formula (1)

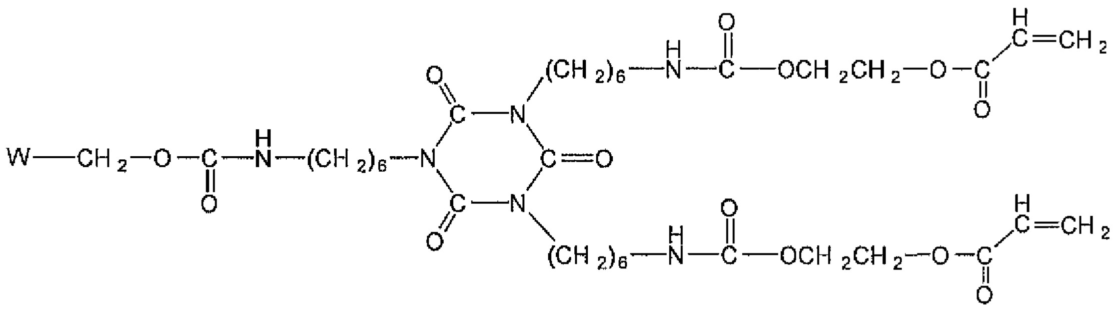

wherein W represents a perfluoropolyether group.

**6.** The transfer film according to any one of claims 1 to 5, wherein the soil resistant cured film contains a low refractive index component.

**7.** The transfer film according to any one of claims 1 to 6, wherein an adhesive layer is laminated on the surface of the soil resistant cured film not contacting the transparent base material film.

**8.** The transfer film according to any one of claims 1 to 6, the transfer film comprising a soil resistant cured film and a function layer sequentially laminated on a surface of a transparent base material film, wherein the function layer contains at least one layer selected from a low refractive index layer, a high refractive index layer, a hard coat layer, and an antistatic layer.

**9.** The transfer film according to claim 8, wherein an adhesive layer is laminated on a surface of the function layer not contacting the soil resistant cured film,

**10.** The transfer film according to claim 7 or 9, wherein the adhesive layer is a layer of a thermoplastic resin coating film containing a thermoplastic resin or a layer of a curable film containing an active energy beam curable composition.

**11.** A method for producing the transfer film according to any one of claims 1 to 10, the method comprising the steps of:

applying a soil resistant composition onto a surface of a transparent base material film to form a soil resistant film, and
curing the soil resistant film to form a soil resistant cured film,

**12.** The method for producing the transfer film according to claim 11, wherein the transparent base material film comprises

an aromatic polyester compound.

**13.** A method for producing the transfer film according to any one of claims 1 to 10, the method comprising:

a soil resistant film forming step of applying a soil resistant composition onto a surface of a transparent base material film to form a soil resistant film,
a liquid organic compound applying step of applying at least one liquid organic compound selected from alcohol, ester, ether, and ketone onto the surface of the soil resistant film,
a volatilizing step of volatilizing the applied liquid organic compound, and
a soil resistant cured film forming step of curing the soil resistant film to form a soil resistant cured film.

**14.** A method for producing a resin laminate, the method comprising the steps of:

bonding an adhesive layer of the transfer film according to claim 7 or 9 to a resin base material, and
removing the transparent base material film from the soil resistant cured film to obtain a resin laminate.

**15.** The method for producing a resin laminate according to claim 14, wherein
the adhesive layer contains an active energy beam curable mixture, and
after the step of bonding the adhesive layer of the transfer film to the resin base material, the adhesive layer is irradiated with an active energy beam to cure the active energy beam curable mixture and form a cured coating film layer.

**16.** A resin laminate produced by the method according to claim 14 or 15, wherein
a water contact angle of an exposed surface of the soil resistant cured film is not less than 90˚, a contact angle ($\alpha$) of triolein is not less than 55˚, and a composition ratio (N/F) of a nitrogen atom (N) to a fluorine atom (F) obtained by X-ray photoelectron spectroscopic analysis is not more than 0.110.

**INTERNATIONAL SEARCH REPORT**

International application No.
PCT/JP2010/067516

A. CLASSIFICATION OF SUBJECT MATTER
*B32B27/00*(2006.01)i, *B32B27/30*(2006.01)i

According to International Patent Classification (IPC) or to both national classification and IPC

B. FIELDS SEARCHED

Minimum documentation searched (classification system followed by classification symbols)
B32B1/00-43/00, C09D1/00-10/00, 101/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2003-103680 A (Reiko Co., Ltd.), 09 April 2003 (09.04.2003), claim 1; paragraphs [0009], [0010], [0017], [0032]; fig. 1 (Family: none) | 1-12,14-16<br>13 |
| Y | WO 2007/102370 A1 (Dow Corning Toray Co., Ltd.), 13 September 2007 (13.09.2007), claims; paragraphs [0006], [0071], [0079], [0091] & EP 1995260 A1 | 1-12,14-16 |
| A | JP 2009-114248 A (Mitsubishi Rayon Co., Ltd.), 28 May 2009 (28.05.2009), claim 1; paragraphs [0006], [0045] (Family: none) | 1-16 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 December, 2010 (14.12.10) | 28 December, 2010 (28.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/067516

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-53691 A (Dainippon Printing Co., Ltd.), 12 March 2009 (12.03.2009), paragraphs [0019], [0029], [0152], [0153], [0169], [0170], [0261] & US 2009/0176084 A1 | 4 |
| A | JP 2007-178724 A (Mitsubishi Rayon Co., Ltd.), 12 July 2007 (12.07.2007), paragraph [0009] (Family: none) | 13 |

Form PCT/ISA/210 (continuation of second sheet) (July 2009)

**INTERNATIONAL SEARCH REPORT**

International application No.
PCT/JP2010/067516

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention in claim 1 and the invention in claim 2 have such a common technical feature as "a transfer film wherein a resist-printing cured membrane is laminated on the surface of a transparent base material film". However, the above-said technical feature does not make a contribution over the prior art in the light of the contents disclosed in the document 1 (JP 2003-103680 A (Reiko Co., Ltd.), 9 April 2003 (09.04.2003), [claim 1], [0009], [0017], [fig. 1]), and therefore cannot be considered to be a special technical feature.

(continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

INTERNATIONAL SEARCH REPORT

International application No.
PCT/JP2010/067516

Continuation of Box No.III of continuation of first sheet(2)

Furthermore, there is no other same or corresponding special technical feature between the above-said inventions.

The following two inventions (invention groups) are involved in claims.

(Invention 1) claims 1, 3 - 16:

A transfer film wherein both surfaces of a resist-printing cured membrane have a specified contact angle.

(Invention 2) claim 2:

A transfer film wherein the composition ratio between a nitrogen atom and a fluorine atom in the surface which is in contact with a transparent base material film of a resist-printing cured membrane is within a specified range.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000094584 A
- JP 2005096322 A
- JP 2003103680 A
- WO 2009235652 A
- WO 2009239886 A